# FASCICULE DE BREVET EUROPEEN

(11) **EP 0 972 102 B1**
(45) Date de publication et mention de la délivrance du brevet: **12.11.2003**
(21) Numéro de dépôt: 98917226.7
(22) Date de dépôt: 25.03.1998
(51) Int. Cl.: D04H 13/00, D04H 3/04

(54) **Procédé pour la réalisation de nappes fibreuses multiaxiales**
Verfahren zur Herstellung von multiaxialen Vliesstoffen
method for producing multiaxial fibrous webs

(30) Priorité: 28.03.1997 FR 9703832
(43) Date de publication de la demande: 19.01.2000
(73) Titulaire: SOCIETE NATIONALE D'ETUDE ET DE CONSTRUCTION DE MOTEURS D'AVIATION, "S.N.E.C.M.A.", 75015 Paris (FR); Hexcel Fabrics, 69608 Villeurbanne Cedex (FR)
(72) Inventeur: BOMPARD, Bruno, F-69003 Lyon (FR); OLRY, Pierre, F-33000 Bordeaux (FR); DUVAL, Renaud, F-69270 Couzon au Mont d'Or (FR); BRUYERE, Alain, F-38090 Villefontaine (FR); COUPE, Dominique, F-33165 Le Haillan (FR); AUCAGNE, Jean, F-38110 La Tour du Pin (FR)
(74) Mandataire: Joly, Jean-Jacques
(86) Numéro de dépôt international: FR9800597
(87) Numéro de publication internationale: WO98044183

(56) Documents cités:
- FR-A- 2 185 497
- GB-A- 1 447 030
- US-A- 3 250 655
- US-A- 3 566 733
- US-A- 4 256 522

## Description

### DOMAINE DE L'INVENTION

L'invention concerne la réalisation de nappes fibreuses, et plus particuliérement de nappes multiaxiales formées par superposition et liaison entre elles de plusieurs nappes fibreuses unidirectionnelles disposées dans des directions différentes,

Un domaine d'application de l'invention est la réalisation de nappes fibreuses multiaxiales destinées à former des strates de renfort pour l'élaboration de pièces en matériau composite. Les matériaux visés sont notamment ceux constitués d'un renfort en fibres, organiques ou minérales, ou leurs précurseurs, telles que fibres de polymère, verre, carbone, céramique, para-aramide, ....., lequel renfort est densifié par une matrice organique, par exemple une résine, ou inorganique, par exemple verre, carbone ou céramique.

### ETAT DE LA TECHNIQUE

ll est connu de longue date de réaliser des nappes fibreuses multiaxiales par superposition de nappes unidirectionnelles, c'est-à-dire formées de fils ou de fibres orientés essentiellement dans une seule direction, les nappes unidirectionnelles étant superposées avec des directions différentes.

Une technique courante consiste à réaliser d'abord des nappes fibreuses unidirectionnelles en leur donnant suffisamment de cohésion pour pouvoir être manipulées sans dispersion des éléments qui les composent.

Une solution couramment proposée consiste à lier les éléments formant la chaîne des nappes unidirectionnelles par des fils disposés en trame. ll en résulte inévitablement la formation d'ondulations qui, lorsque plusieurs nappes sont superposées et pressées les unes contre les autres, peuvent entraîner l'écrasement et la rupture de fibres et créent des discontinuités. Cela se traduit par une dégradation des nappes multiaxiales réalisées et, par conséquent, des propriétés mécaniques de pièces en matériaux composites élaborées à partir de ces nappes multiaxiales.

Pour remédier à cet inconvénient, une solution bien connue consiste à utiliser des fils de liage en nombre et/ou de titre aussi petit que possible. Les documents GB-A-1 190 214 (Rolls Royce Limited), s'agissant de nappes en fibres de précurseur de carbone, et FR-A-1 469 065 (Les Fils d'Auguste Chomarat & Cie), s'agissant de nappes en fibres de verre, illustrent cette approche. Toutefois, à l'évidence, l'inconvénient précité est amoindri, mais non éliminé.

Il a aussi été proposé dans le document EP-A-0 193 478 (Etablissements Les Fils d'Auguste Chomarat & Cie) d'utiliser des fils de liage, mais en une matière thermofusible. Lors de l'élaboration du matériau composite, les températures utilisées peuvent entraîner une fusion au moins partielle des fils de liage, donc amoindrir les surépaisseurs aux croisements entre ceux-ci et les éléments de la chaîne. Mais il est nécessaire que la matière des fils de liage soit compatible avec la nature de la matrice du matériau composite, ce qui limite beaucoup l'utilisation du procédé.

Une autre solution évoquée dans le document FR-A-1 394 271 (Les Fils d'Auguste Chomarat & Cie) consiste à disposer des fils en fibres de verre parallèlement les uns aux autres et à les lier chimiquement, le liant utilisé devant être soluble dans la matrice. Là encore, la nécessaire compatibilité entre le liant et la matrice limite les applications du procédé. De plus, aucun moyen n'est décrit permettant de disposer les fils parallèlement les uns aux autres et l'on conçoit aisément que la réalisation de nappes de grande largeur de façon industrielle soulève de réelles difficultés pratiques. Enfin, la nappe obtenue n'est pas exempte d'ondulations résultant de la disposition des fils côte à côte.

Encore une autre solution consiste à étaler plusieurs câbles, à rassembler côte à côte les bandes fibreuses unidirectionnelles ainsi obtenues pour former une nappe, et à donner une cohésion transversale à la nappe par aiguilletage. Un tel procédé est décrit notamment dans le document US-A-5 184 387 (cédé à Aerospace Preforms Limited), les câbles utilisés étant en fibres de précurseur de carbone capables de supporter l'aiguilletage sans être brisées. Toutefois, des nappes multiaxiales ne sont pas réalisées par superposition de ces nappes unidirectionnelles. Selon ce document, des secteurs annulaires sont découpés dans la nappe unidirectionnelle pour former des strates annulaires qui sont superposées et aiguilletées.

Pour éviter d'avoir à donner une cohésion même temporaire à des nappes unidirectionnelles destinées à la fabrication de nappes multiaxiales, il est connu de réaliser directement des nappes multiaxiales en formant plusieurs nappes unidirectionnelles et en les superposant dans des directions différentes, sans manipulation intermédiaire. La liaison des nappes superposées peut être réalisée par liage, par couture ou par tricotage.

Des documents illustrant cette technique sont par exemple les documents US-A-4 518 640, US-A-4 484 459 et US-A-4 677 831.

Dans le document US-A-4 518 640 (cédé à Karl Mayer), des fils de renfort sont introduits dans la nappe en cours de formation, ce qui permet d'assurer une liaison sans percer à travers les fibres. Toutefois, il en résulte la présence d'ouvertures dans la nappe multiaxiale qui produisent des discontinuités de surface.

Dans le document US-A-4 484 459 (cédé à Knytex Preform), chaque nappe unidirectionnelle est formée en faisant passer un fil autour de picots portés par deux chaînes sans fin parallèles, de sorte que les parties de fils s'étendant librement entre les picots soient parallèles entre elles. Des nappes unidirectionnelles sont formées en guidant les fils respectifs suivant des directions différentes et sont liées entre elles par couture. Avec cette technique, on ne peut pas avoir de fils de renfort dans la direction longitudinale de la nappe multiaxiale ; or, il est souvent requis de disposer d'éléments de renfort dans cette direction principale. De plus, si on exerce une tension importante sur le fil pour garantir le parallélisme dans chaque nappe, les portions de fils s'étendant entre les chaînes à picots peuvent avoir tendance à s'arrondir par resserrement des fibres, provoquant des ouvertures dans la nappe multiaxiale. On notera enfin que cette technique ne permet pas une vitesse de production très élevée eu égard au temps nécessaire à la formation de chaque nappe unidirectionnelle.

Dans le document US-A-4 677 831 (cédé à Liba Maschinenfabrik GmbH), la technique décrite consiste à déplacer longitudinalement une nappe unidirectionnelle principale, parallèlement à la direction des éléments qui la composent, et à napper sur celle-ci des nappes transversales unidirectionnelles dont les directions font avec celle de la nappe principale (0°), des angles prédéterminés, par exemple +45° et -45° et/ou +60° et -60°. Les nappes transversales sont déposées par un processus de nappage entre deux chaînes à picots situées de chaque côté de la nappe principale. Cette technique, qui n'impose pas nécessairement la présence d'une nappe principale, souffre aussi de plusieurs inconvénients.

Ainsi, il est nécessaire d'éliminer les zones marginales où se produit le retournement des nappes transversales sur les picots. Or, plus les nappes transversales sont larges, plus les zones marginales sont importantes, et plus grandes sont les pertes de matière entraînées par leur élimination, sans compter la plus grande difficulté du retournement des nappes. Cela limite grandement la largeur des nappes transversales utilisables. De plus, on retrouve l'inconvénient déjà cité d'une possible irrégularité de la nappe multiaxiale, en particulier la formation de trous, notamment en raison des tensions qu'il est nécessaire d'appliquer aux éléments des nappes transversales pour les maintenir parallèles pendant le nappage.

En outre, une densité de couture relativement importante est nécessaire, immédiatement après nappage, pour conférer une tenue suffisante à la nappe multiaxiale obtenue. Outre qu'il est alors impossible de préserver un état de surface lisse, cette forte densité de couture affecte la souplesse de la nappe multiaxiale et limite sa déformabilité en vue de son utilisation, par exemple par drapage.

De plus encore, dans le cas où une nappe principale (0°) est prévue, il est nécessaire de la soutenir pendant le nappage des nappes transversales, de sorte que celles-ci se trouvent toutes d'un côté de la nappe principale. On dispose bien d'éléments de renfort s'étendant dans la direction principale (0°), mais la nappe multiaxiale obtenue ne présente pas de symétrie entre ses faces. Or, une telle symétrie est avantageuse pour faciliter la construction de renforts réguliers et il est donc souhaitable de disposer de la direction principale 0° au milieu de la nappe multiaxiale, entre ses faces.

On notera aussi qu'un inconvénient commun à ces techniques utilisant des fils pour la formation des nappes unidirectionnelles consiste dans l'obtention de nappes multiaxiales qui, d'une part, présentent une rugosité de surface due aux fils et, d'autre part, ne peuvent être aussi minces qu'il pourrait parfois être souhaité.

Enfin, un procédé de réalisation d'une nappe multiaxiale à partir de nappes unidirectionnelles est encore décrit dans le document GB-A-1 447 030 (Hyfil Limited). Une première nappe unidirectionnelle en fibres de carbone formant chaîne est pré-aiguilletée et une autre nappe unidirectionnelle formant trame est liée à la première également par aiguilletage. Le pré-aiguilletage de la première nappe vise à déplacer des fibres du côté où la deuxième nappe est disposée, pour contribuer à la liaison avec celle-ci. On note que les nappes unidirectionnelles utilisées sont rendues cohérentes par un fil de liage, comme décrit dans le document GB-A-1 190 214 déjà cité, avec les inconvénients qui en résultent.

On notera encore que les techniques connues évoquées ci-avant souffrent toutes d'un inconvénient qui réside dans le coût relativement élevé des nappes fibreuses multiaxiales lorsqu'elles sont réalisées avec des fibres de carbone. Or, il existe un besoin d'abaisser les coûts de telles nappes, notamment afin d'étendre leur champ d'application.

### BUTS DE L'INVENTION

Un but de l'invention est de proposer un nouveau procédé de réalisation de nappes fibreuses multiaxiales permettant en particulier d'abaisser le coût de réalisation de ces nappes, en vue notamment de rendre attractives des nappes multiaxiales réalisées avec des fibres réputées onéreuses, telles que les fibres de carbone.

Un autre but de l'invention est de proposer un procédé permettant de réaliser des nappes multiaxiales "miroir", c'est-à-dire des nappes multiaxiales présentant un caractère de symétrie par rapport à un plan médian, notamment par rapport à une nappe unidirectionnelle principale (0°), celle-ci étant donc située entre des nappes unidirectionnelles transversales faisant des angles opposés par rapport à la direction principale.

Un autre but de l'invention est de proposer un procédé permettant de réaliser des nappes fibreuses multiaxiales présentant un aspect de surface lisse, sans irrégularités telles que des trous ou des rugosités.

Un autre but de l'invention est de proposer un procédé permettant de réaliser des nappes fibreuses multiaxiales dont la cohérence peut ne requérir qu'une très faible densité de liaison transversalement aux nappes unidirectionnelles qui les composent, de sorte qu'une bonne déformabilité des nappes multiaxiales peut être préservée.

Un autre but de l'invention est de fournir des nappes fibreuses multiaxiales présentant les propriétés ci-dessus tout en ayant une grande largeur, et une épaisseur et une masse surfacique réduites.

L'invention a encore pour but de proposer un procédé et une machine de nappage permettant de réaliser des nappes fibreuses multiaxiales à partir de nappes unidirectionnelles pouvant être relativement larges, en conservant une bonne régularité de surface et en limitant les pertes de matière.

### DESCRIPTION SOMMAIRE DE L'INVENTION

Un objet de l'invention est un procédé de réalisation d'une nappe fibreuse multiaxiale en forme de nappe comprenant les étapes qui consistent à superposer plusieurs nappes unidirectionnelles dans des directions différentes, et lier les nappes superposées entre elles,
procédé dans lequel, pour réaliser au moins l'une des nappes unidirectionnelles, on étale au moins un câble de manière à obtenir une nappe d'épaisseur sensiblement uniforme ayant une largeur au moins égale à 5 cm et une masse surfacique au plus égale à 300g/m², et on confère à la nappe unidirectionnelle une cohésion lui permettant d'être manipulée préalablement à sa superposition avec au moins une autre nappe unidirectionnelle.

Selon une particularité du procédé, pour réaliser au moins l'une des nappes unidirectionnelles, on utilise plusieurs câbles, on étale les câbles pour former des bandes unidirectionnelles et on dispose les bandes les unes à côté des autres pour obtenir une nappe unidirectionnelle ayant une largeur au moins égale à 5 cm et une masse surfacique au plus égale à 300g/m².

Pour mieux apprécier un avantage du procédé, dans le cas notamment du carbone, au moins l'une des nappes unidirectionnelles est obtenue de préférence par étalement d'au moins un câble ayant un nombre de filaments égal ou supérieur à 12K (12 000 filaments) et pouvant aller jusqu'à au moins 480K (480 000 filaments).

Une approche similaire peut être faite avec toutes les fibres techniques.

Un avantage du procédé est ainsi d'utiliser des gros câbles, notamment les câbles les plus gros disponibles pour les différentes natures de fibres.

Or, et ceci est vrai en particulier pour le carbone, le coût des gros câbles est, à masse égale, bien inférieur à celui de câbles plus légers ou de fils qui, à la connaissance des déposants, sont ceux utilisés dans l'état de la technique pour la réalisation de nappes multiaxiales.

A titre illustratif, le tableau ci-après donne, pour des fils ou câbles de carbone disponibles dans le commerce formés de différents nombres de filaments, la masse surfacique qui peut être obtenue pour une nappe unidirectionnelle, selon qu'elle est formée de fils parallèles entre eux, comme dans l'art antérieur, ou par étalement de câbles comme dans le cas de la présente invention. Il s'agit de fils ou câbles de carbone haute résistance ou haut module à précurseur polyacrylonitrile ou brai anisotrope.

| Fil ou câble | Masse surfacique | |
|---|---|---|
| Nombre de filaments | Nappe unidirectionnelle formée de fils parallèles | Nappe unidirectionnelle formée par étalement et fixation |
| 3 K | 150 à 200 g/m² | |
| 6 K | 200 à 250 g/m² | |
| 12 K | 250 à 300 g/m² | 100 à 150 g/m² |
| 50 K | | 100 à 250 g/m² |
| 320 K | | 100 à 300 g/m² |
| 480 K | | 200 à 300 g/m² |

L'étalement d'un câble, ou de plusieurs câbles qui, après juxtaposition, forment au moins une nappe unidirectionnelle étant effectué jusqu'à atteindre une masse surfacique au plus égale à 300g/m², il est possible, en partant d'un nombre limité de câbles lourds, d'obtenir une nappe de largeur relativement grande, c'est-à-dire au moins égale à 5 cm, de préférence au moins égale à 10 cm.

L'utilisation de nappes unidirectionnelles ayant une masse surfacique relativement peu élevée permet de conserver cette propriété pour les nappes multiaxiales fabriquées avec ces nappes unidirectionnelles.

En outre, contrairement aux techniques connues évoquées plus haut utilisant des nappes de fils parallèles, l'utilisation de nappes obtenues par étalement de câbles jusqu'à aboutir à une faible masse surfacique se traduit par la réalisation de nappes multiaxiales dépourvues de défauts de surface, tels que des trous ou ondulations, et d'aspect de surface lisse. Il est possible aussi, avec le procédé selon l'invention, d'utiliser des fibres fragiles.

Lorsque la nappe unidirectionnelle est formée de filaments discontinus, une cohésion peut lui être conférée par un léger entremêlement des filaments. A cet effet, on peut recourir à une exposition à un jet d'eau sous pression, la nappe étant disposée au-dessus d'un tapis, ou à un aiguilletage. La nappe peut ensuite être élargie sans perdre sa cohésion.

Dans tous les cas, que la nappe unidirectionnelle soit formée de filaments continus ou discontinus, une cohésion peut lui être conférée par apport d'un agent chimique de liaison éventuellement éliminable (ou fugitif). Celui-ci est apporté avantageusement par projection d'une composition liquide sur la nappe ou passage dans un bain. La cohésion peut également être apportée par projection sur la nappe d'une poudre d'un polymère thermofusible ou thermocollant.

On peut aussi envisager la possibilité de conférer une cohésion transversale à au moins l'une des nappes unidirectionnelles utilisées par fixation d'au moins un fil ou film thermofusible ou thermocollant, ou encore par formation d'un "trait de colle", par exemple un adhésif en solution dans un solvant évaporable.

Le procédé selon l'invention vise plus particulièrement la réalisation d'une nappe multiaxiale continue ayant une direction longitudinale, réalisation au cours de laquelle au moins une nappe unidirectionnelle transversale est amenée sur un support mobile dans une direction d'avance parallèle à la direction longitudinale de la nappe multiaxiale, la ou chaque nappe unidirectionnelle transversale étant amenée en segments successifs adjacents ou se recouvrant partiellement en formant un même angle choisi par rapport à la direction d'avance.

La cohésion des nappes unidirectionnelles superposées permet de réaliser des nappes multiaxiales avec une liberté de disposition des nappes unidirectionnelles les unes par rapport aux autres et offre ainsi une grande flexibilité dans l'ordre des nappes unidirectionnelles superposées. Il est ainsi possible de réaliser des nappes multiaxiales présentant une symétrie par rapport à un plan médian (symétrie "miroir"), notamment par rapport à une nappe unidirectionnelle médiane longitudinale ayant une direction parallèle à la direction d'avance et au moins deux nappes unidirectionnelles transversales disposées de part et d'autre de la nappe longitudinale en formant avec celle-ci des angles opposés,

Selon un mode de réalisation préféré du procédé, chacun des segments successifs formant une nappe transversale est amené en déplaçant la nappe sur une longueur sensiblement égale à la dimension de la nappe multiaxiale mesurée parallèlement à la direction de la nappe transversale, en découpant le segment ainsi amené, et en déposant le segment découpé sur le support mobile ou la nappe multiaxiale en cours de réalisation. Avantageusement, la nappe transversale est renforcée dans les zones où elle est découpée, par exemple par fixation d'un film sur au moins une de ses faces.

On notera que le nappage des nappes transversales en segments successifs découpés permet de limiter les pertes de matière par rapport à la technique connue de nappage par retournement de la nappe autour de picots. De plus, cette façon d'opérer, qui ménage les fibres, permet de napper des fibres fragiles, telles que des fibres de carbone à haut module ou à base de brai anisotrope, ou des fibres céramiques. En outre, la reprise du processus de nappage après rupture d'alimentation en nappe transversale est grandement facilitée par rapport au cas où les nappes transversales sont formées d'un ensemble de fils parallèles non liés.

Un autre objet de l'invention consiste en une nappe fibreuse unidirectionnelle ou multiaxiale telle qu'obtenue selon le procédé ci-dessus.

Encore un autre objet de l'invention est la réalisation de pièces en matériau composite comportant un renfort fibreux densifié par une matrice, pièces dans lesquelles le renfort fibreux est réalisé à partir d'au moins une telle nappe unidirectionnelle ou multiaxiale.

### BREVE DESCRIPTION DES DESSINS

L'invention sera mieux comprise à la lecture de la description faite ci-après à titre indicatif mais non limitatif, en référence aux dessins annexés sur lesquels :
- la Figure 1 est une vue générale partielle d'une installation permettant la réalisation de nappes unidirectionnelles cohérentes ;
- la Figure 2 est une vue schématique partielle de dessus de l'installation de la Figure 1 ;
- la Figure 3 est une vue partielle d'une première variante de réalisation des moyens de cohésion de l'installation de la Figure 1 ;
- la Figure 4 est une vue partielle d'une deuxième variante de réalisation des moyens de cohésion de l'installation de la Figure 1 ;
- la Figure 5 est une vue schématique illustrant en partie la réalisation et l'élargissement d'une nappe unidirectionnelle cohérente formée de fibres discontinues ;
- les Figures 6A-6B montrent une vue générale très schématique de dessus d'une machine de nappage pour la réalisation de nappes fibreuses multiaxiales, conformément à un mode de mise en oeuvre de l'invention ;
- la Figure 7 est une vue schématique de détail en élévation montrant le dispositif de mise en place de films de renfort locaux dans la machine des Figures 6A-6B ;
- les Figures 8A à 8C illustrent les étapes successives de mise en place de film de renfort avec le dispositif de la Figure 7 ;
- la Figure 9 est une vue schématique de détail en élévation latérale montrant le dispositif de découpe de segment de nappe unidirectionnelle transversale et de fixation de segment découpé dans la machine des Figures 6A-6B ;
- la Figure 10 est une vue schématique en élévation en bout du dispositif de découpe et de fixation de la Figure 9;
- les Figures 11 A à 11C illustrent les étapes successives d'amenée, de découpe et de fixation d'un segment de nappe unidirectionnelle transversale dans la machine des Figures 6A-6B ;
- la Figure 12 illustre très schématiquement et de façon partielle une variante de réalisation de la machine de nappage des Figures 6A-6B;
- les Figures 13A à 13D illustrent les étapes successives d'amenée, de découpe et de fixation d'un segment de nappe unidirectionnelle transversale suivant une autre variante de réalisation de la machine de nappage des figures 6A-6B;
- la Figure 14 illustre très schématiquement une variante de réalisation de la fixation de segments de nappe unidirectionnelle transversale dans une machine de nappage telle que celle des Figures 6A-6B;
- la Figure 15 illustre très schématiquement une variante de réalisation du nappage des nappes unidirectionnelles transversales ; et
- la Figure 16 illustre très schématiquement une variante de nappage avec recouvrement partiel de nappes unidirectionnelles transversales ; et
- les Figures 17, 18 et 19 illustrent très schématiquement une première, une deuxième et une troisième variantes de réalisation des moyens de liaison de nappes unidirectionnelles superposées dans une machine de nappage.

### DESCRIPTION DETAILLEE DE MODES PREFERES DE REALISATION

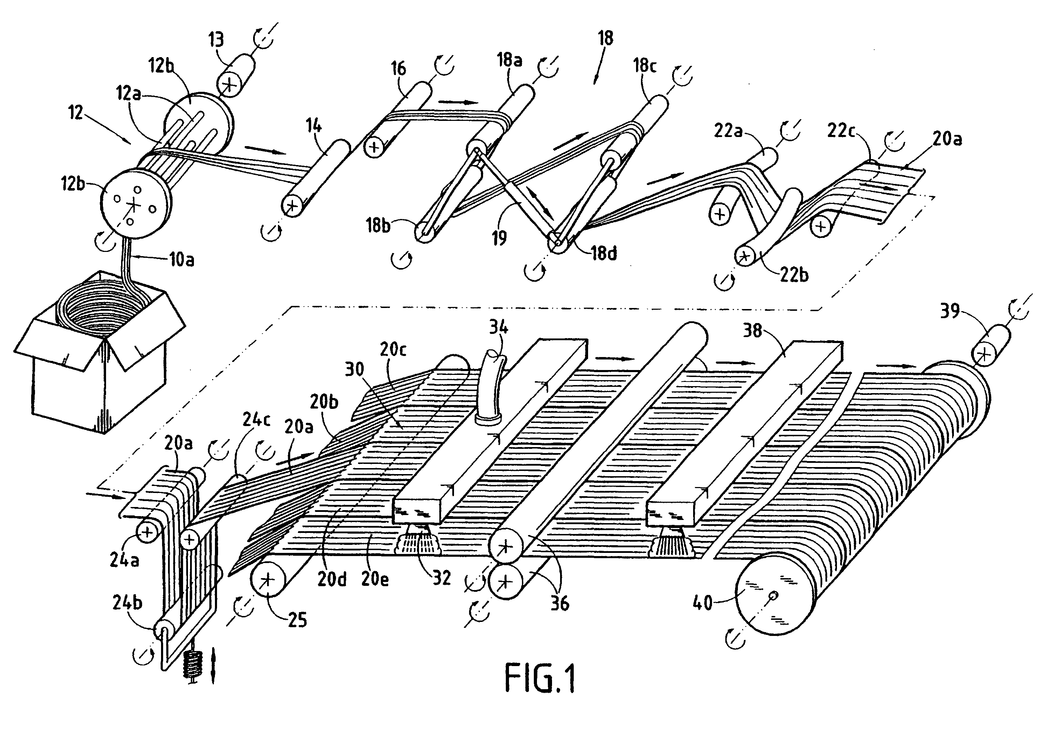

### Réalisation de nappe unidirectionnelle (Figures 1 à 5)

Des câbles sont étalés individuellement et les bandes unidirectionnelles obtenues sont éventuellement juxtaposées pour former une nappe unidirectionnelle dont la cohésion est assurée par apport d'un agent de liaison ou accrochage entre filaments constitutifs de la nappe, avant stockage de la nappe sur une bobine.

Sur la Figure 1, un seul dispositif d'étalement de câble est représenté, pour plus de clarté du dessin. Un câble 10a est tiré directement d'un carton où il a été bambanné. En variante, le câble pourrait être tiré d'une bobine portée par un cantre.

Des câbles de différentes natures peuvent être utilisés, selon l'utilisation envisagée pour la nappe. Il pourra s'agir par exemple de câbles formés de fibres carbone ou céramique, ou de précurseurs de carbone ou céramique, de fibres de verre, de fibres aramides, ou d'un mélange de fibres différentes. Les céramiques utilisables sont notamment le carbure de silicium et les oxydes réfractaires, par exemple alumine et zircone. Les câbles pourront être formés de filaments continus ou discontinus, par exemple, dans ce dernier cas, obtenus par craquage de câbles de filaments continus. Dans le cas de câbles formés de filaments discontinus, on pourra utiliser des câbles hybrides comprenant des filaments de différentes matières intimement mélangés. Cela peut être obtenu en amenant des câbles ou rubans craqués réalisés en des matières différentes et en mélangeant leurs fibres par passage dans un gill-box.

On utilise, lorsque cela est possible, des câbles lourds afin notamment de diminuer le prix de revient des nappes produites. Par câble lourd, on entend ici un câble formé d'au moins 12K filaments (c'est-à-dire un câble formé de 12 000 filaments), de préférence un câble ayant un nombre de filaments au moins égal à 50K et pouvant aller jusqu'à 480K ou même plus.

Le câble 10a passe sur un dispositif batteur démêleur 12 formé de plusieurs barreaux 12a qui s'étendent entre deux flasques 12b, l'ensemble étant entraîné en rotation autour d'un axe parallèle aux barreaux, sous l'action d'un moteur 13. Les barreaux 12a, par exemple au nombre de quatre, sont disposés régulièrement autour de l'axe de rotation.

Après passage sur deux rouleaux de renvoi 14, 16 montés libres en rotation, le câble 10a parvient à un dispositif de réglage de tension 18 formé de quatre rouleaux 18a, 18b, 18c, 18d également montés libres en rotation. Ces rouleaux constituent de façon bien connue un parallélogramme déformable sous l'action d'un vérin 19 qui permet, en agissant sur des bras portant les rouleaux, d'allonger ou réduire le trajet du câble 12a à travers le dispositif de réglage de tension pour maintenir celle-ci constante.

Le câble 12a passe ensuite successivement sur plusieurs rouleaux cintrés fixes 22a, 22b, 22c en forme de "bananes". Ces rouleaux, par exemple au nombre de trois, provoquent de façon connue l'étalement du ruban pour former une bande unidirectionnelle mince 20a.

La tension de la bande 20a est mesurée de façon classique par passage sur des rouleaux 24a, 24b, 24c parmi lesquels le rouleau 24b est mobile verticalement en étant rappelé par une force élastique. L'information de variation de tension de bande fournie par la mesure du déplacement de l'axe du rouleau 24b, est utilisée pour commander le vérin 19 afin de maintenir constante la tension mesurée.

La bande 20a est accolée avec d'autres bandes identiques ou similaires 20b, 20c, 20d, 20e, sur un rouleau 25 libre en rotation pour former une nappe unidirectionnelle 30. Ainsi, les bandes peuvent provenir de câbles identiques ou différents, par exemple, dans ce dernier cas, de câbles de titres différents, ou formés de fibres de natures différentes permettant d'obtenir une nappe hybride.

Les bandes 20b à 20e sont obtenues au moyen de dispositifs d'étalement de câbles identiques à celui qui vient d'être décrit.

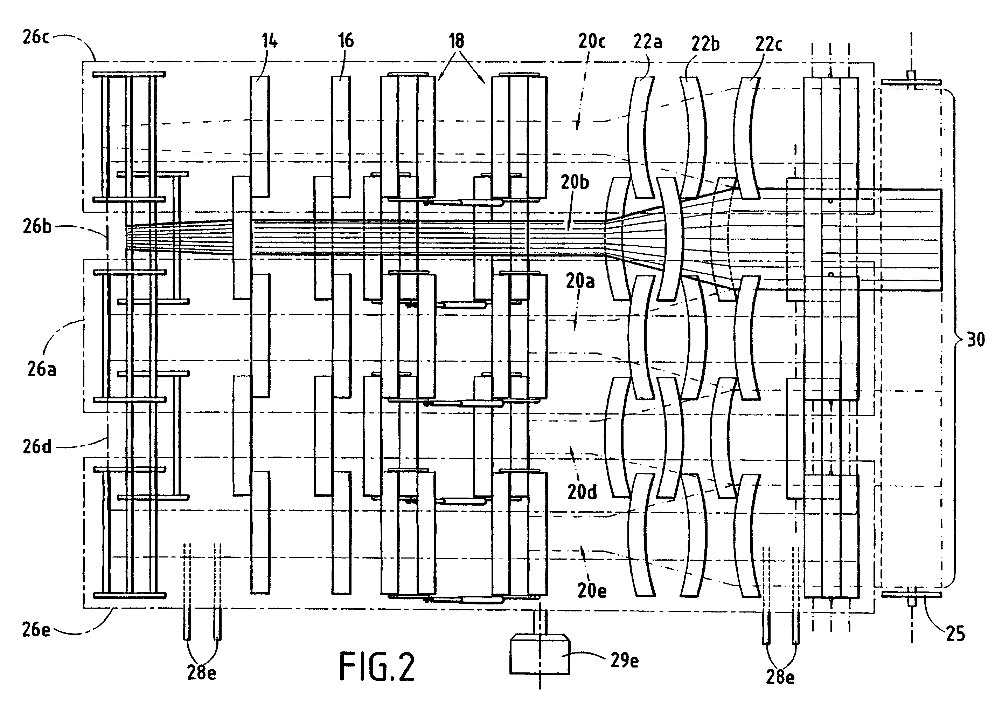

Comme le montre la Figure 2, les différents dispositifs d'étalement sont montés sur des chevalets respectifs 26a, 26b, 26c, 26d, 26e représentés par des rectangles en traits mixtes. Les chevalets sont disposés alternativement au-dessus et au-dessous d'un même plan horizontal pour ne pas interférer mutuellement.

Les bandes 20a à 20e provenant des différents dispositifs d'étalement se rejoignent sur le rouleau 25. Afin d'ajuster les positions des bandes pour qu'elles soient exactement adjacentes, les positions des chevalets, en direction transversale par rapport à l'avance des câbles, peuvent être réglées. Ainsi, chaque chevalet, par exemple 26e, est déplaçable le long de glissières de guidage transversales 28e sous l'action d'un moteur 29e.

En variante, les bandes unidirectionnelles peuvent être disposées les unes à côté des autres non pas de façon adjacente, mais avec un recouvrement mutuel partiel. Une moindre tolérance est requise en comparaison avec la disposition des bandes exactement bord à bord, mais les parties situées le long de chaque bord de la nappe formée doivent être sacrifiées.

Une cohésion transversale est conférée à la nappe 30 en projetant sur celle-ci, en aval du rouleau 25, une composition liquide contenant un agent chimique de liaison, par exemple une composition comprenant un polymère en solution.

Différents polymères peuvent être utilisés. Il pourra s'agir avantageusement de polymères ayant un caractère fugitif, c'est-à-dire éliminable aisément par exemple par dissolution ou traitement thermique. Parmi ceux-ci, on peut citer des polymères de type alcool polyvinylique (PVA) ou polyvinylpyrrolydone, solubles dans l'eau, ou un polyester soluble. ll est également envisageable d'utiliser des polymères compatibles avec une matrice déposée à un stade ultérieur pour fabriquer un matériau composite avec une texture de renfort formée à partir d'une nappe multiaxiale comportant la nappe unidirectionnelle. Par polymère compatible avec la matrice, on entend ici un polymère, par exemple une résine, ayant même nature ou pouvant se dissoudre dans la matrice, ou encore un polymère de nature différente mais dont la présence, au contact de la matrice, n'affecte pas les propriétés du matériau composite.

La composition liquide est amenée à des buses 32 par une conduite d'alimentation 34. Après projection de cette composition, la nappe passe entre deux rouleaux 36 qui sont appliqués l'un contre l'autre avec une pression réglée de manière à répartir uniformément la quantité voulue de composition liquide sur toute la surface de la nappe 30. Ensuite, la nappe 30 passe devant une rampe de séchage 38 permettant d'éliminer le solvant contenu dans la composition liquide. La nappe cohérente 30 peut alors être stockée sur une bobine 40 entraînée en rotation par un moteur 39.

En variante, la cohésion de la nappe pourra être apportée par projection d'une composition contenant une résine liquide, suivie de la polymérisation de la résine. On utilise avantageusement une résine polymérisable par exposition à un rayonnement ultraviolet, la rampe 38 étant remplacée par une source U.V. Une telle résine est par exemple un acrylate polymérisable par U.V.

D'autres techniques encore pourront être utilisées, par exemple la projection sur la nappe d'une poudre de polymère thermofusible ou thermocollant, ou le dépôt sur la nappe d'un fil ou film thermofusible ou thermocollant, avant exposition à un dispositif de chauffage. Il est envisageable aussi de former sur la nappe des "traits de colle" constitués par un adhésif en solution, le solvant étant ensuite évaporé.

Selon le titre et le nombre des câbles utilisés, on pourra obtenir une nappe 30 plus ou moins large. En partant de câbles ayant un nombre de filaments relativement élevé, comme déjà indiqué, le procédé présente l'avantage de permettre la réalisation de nappes larges, c'est-à-dire d'au moins 5 cm de large, de préférence au moins 10 cm de large ou bien plus, avec un nombre de câbles, donc un nombre de dispositifs d'étalement limité. Une autre caractéristique du procédé est de permettre l'obtention de nappes minces, ayant une masse surfacique au plus égale à 300g/m², et d'épaisseur uniforme.

La fixation de la nappe par apport d'un agent de liaison peut être utilisée aussi bien lorsque les filaments constitutifs de la nappe sont continus que lorsqu'ils sont discontinus.

Lorsque la nappe est destinée à être utilisée pour former un renfort fibreux d'une pièce en matériau composite obtenue par densification du renfort fibreux par une matrice, il est préférable de choisir l'agent de liaison en fonction d'une telle utilisation. On utilisera par exemple un agent de liaison à caractère fugitif, capable de disparaître, par dissolution, ou notamment sous l'effet de la chaleur, avant densification par la matrice du matériau composite. On pourra aussi utiliser un agent de liaison compatible avec la matrice, c'est-à-dire capable de se dissoudre au sein de la matrice ou de subsister sans réagir chimiquement avec celle-ci, de sorte que les propriétés de la matrice ne sont pas altérées.

D'autres modes de fixation conférant à la nappe suffisamment de cohésion transversale pour être manipulée sont envisageables lorsque la nappe est formée de filaments discontinus. Il s'agit en particulier de modes de fixation réalisant un accrochage entre filaments discontinus parallèles.

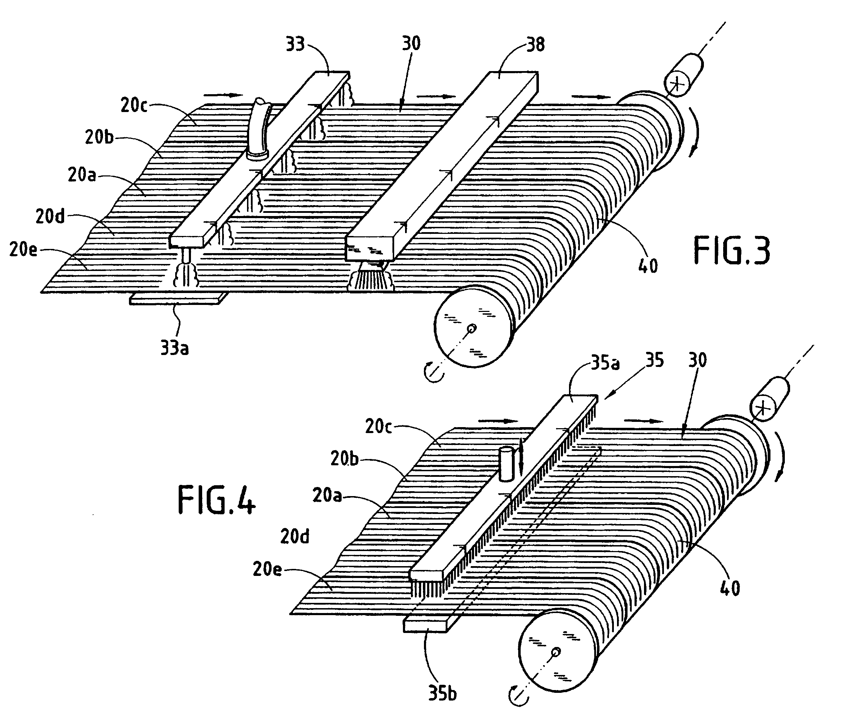

La Figure 3 montre la nappe 30 formée par les bandes unidirectionnelles rassemblées 20a à 20e passant au droit d'un dispositif 33 projetant sur la nappe des jets d'eau sous pression alors que la nappe passe au-dessus d'un tapis métallique 33a. Les jets d'eau, rebondissant sur le tapis 33a, réalisent un entremêlement modéré des filaments discontinus. La nappe 30 passe ensuite devant la rampe de séchage 38 avant d'être stockée sur la bobine 40.

Dans une autre variante montrée sur la Figure 4, la bande 30 passe à travers un dispositif d'aiguilletage 35. Celui-ci comprend une planche à aiguilles 35a animée d'un mouvement alternatif vertical et un support 35b, sur lequel passe la bande 30. Le support 35b est muni de perforations au droit des aiguilles de la planche 35a. De la sorte, les aiguilles pénètrent à travers toute l'épaisseur de la nappe 30 et déplacent des filaments discontinus en provoquant un entremêlement transversal limité qui apporte la cohésion transversale recherchée. La nappe aiguilletée est stockée sur la bobine 40.

Le dispositif d'étalement illustré par la Figure 1, s'il peut être utilisé avec des câbles formés de filaments ou fibres continus ou discontinus, convient plus particulièrement pour des câbles de filaments continus.

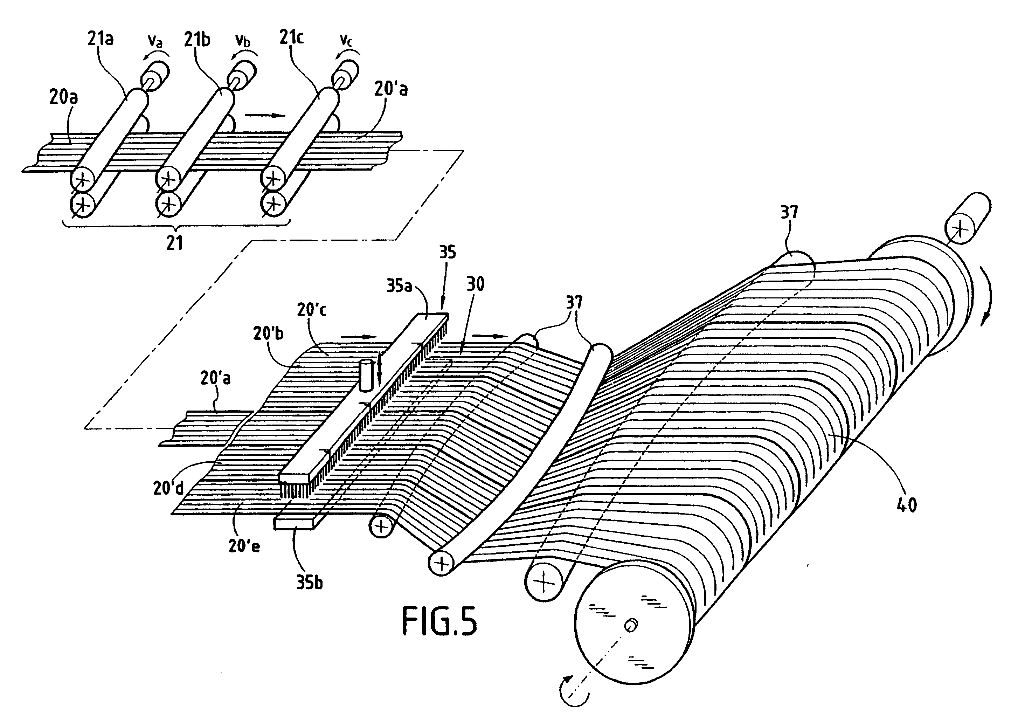

La formation d'une bande ou nappe unidirectionnelle constituée de filaments discontinus comprend avantageusement l'étalement d'un câble de filaments continus, comme illustré par la Figure 1, jusqu'à obtenir une nappe 20a de filaments continus. Celle-ci est amenée à un dispositif d'étirage-craquage 21 (Figure 5). La technique d'étirage-craquage est bien connue en elle-même. Elle consiste à faire passer la nappe entre plusieurs paires de rouleaux d'entraînement successifs, par exemple 21a 21b, 21c, qui sont entraînés à des vitesses respectives vₐ, v_{b}, v_{c} telles que v_{c} > v_{b} > vₐ. En appelant la nappe à des vitesses croissantes, on provoque la rupture des filaments continus. La distance entre les paires de rouleaux, notamment 21a et 21b, donne le diagramme de craquage, c'est-à-dire détermine la longueur moyenne des filaments craqués.

Après étirage-craquage, la nappe 20'a est étirée mais sa masse surfacique est réduite de façon substantielle par rapport à celle de la nappe 20a. La nappe étirée 20'a formée de filaments discontinus est éventuellement juxtaposée bord à bord ou avec recouvrement partiel avec d'autres nappes semblables, 20'b à 20'e, puis est rendue cohérente par les moyens d'entremêlement modéré décrits ci-avant, par exemple en étant soumise à un jet d'eau sous pression comme dans le mode de réalisation de la Figure 3, ou à un aiguilletage par un dispositif d'aiguilletage 35, comme dans le mode de réalisation de la Figure 4.

La nappe obtenue 30 peut être élargie afin de diminuer encore sa masse surfacique, sans que la nappe perde sa cohésion. Cette faculté d'élargissement est donnée par le mode de cohésion choisi (au jet d'eau ou par aiguilletage).

L'élargissement est réalisé par exemple en faisant passer la nappe cohérente 30 sur un ou plusieurs rouleaux cintrés 37, avant son stockage sur la bobine 40.

On notera que l'élargissement de la nappe peut être effectué après son stockage sur la bobine 40, par exemple lorsqu'elle est reprise de la bobine de stockage pour former une nappe multiaxiale.

D'autres techniques connues d'obtention de nappes unidirectionnelles par étalement de câbles pourront être utilisées, par exemple celles décrites dans les documents Rhône Poulenc Fibres FR-A-2 581 085 et FR-A-2 581 086. Selon ces documents, un câble à étaler est amené sur des rouleaux comportant à leur périphérie des éléments allongés élastiques disposés selon des génératrices et munis de picots. Le câble, sur la partie de son trajet au contact d'un rouleau, est engagé sur les picots et étalé par extension des éléments élastiques parallèlement à l'axe du rouleau.

### Réalisation de nappe multiaxiale

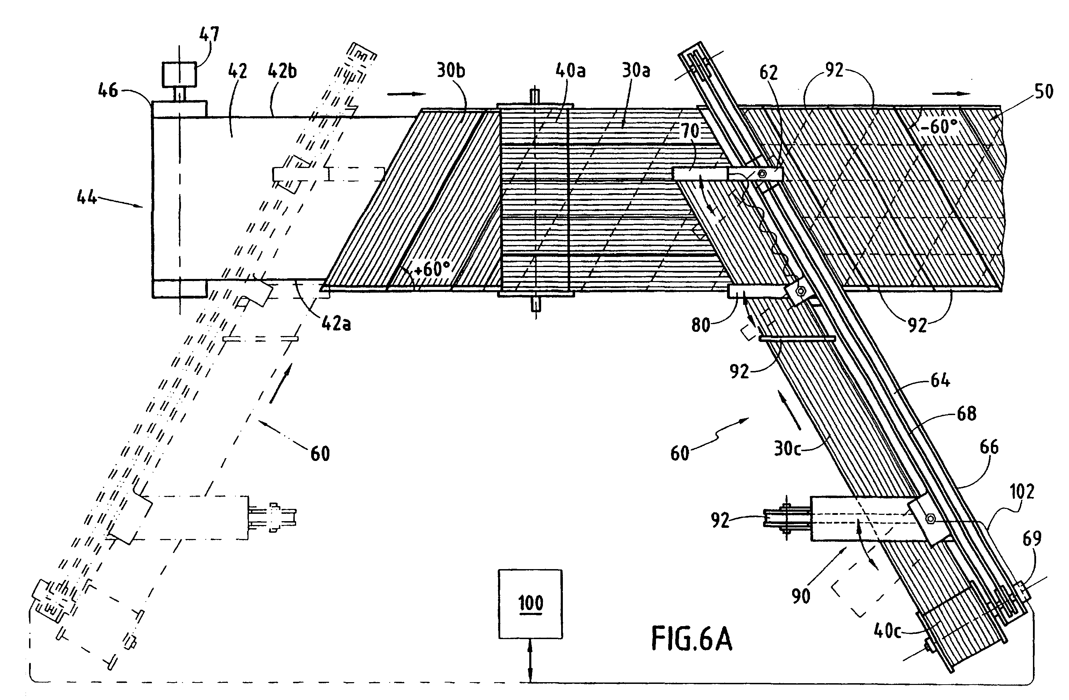

On se réfère maintenant aux Figures 6A-6B qui montrent une machine de nappage selon un mode de réalisation de l'invention, permettant de réaliser une nappe multiaxiale continue, à partir de plusieurs nappes unidirectionnelles dont une au moins peut être obtenue par un procédé tel que décrit ci-avant.

Dans l'exemple illustré, une nappe multiaxiale 50 est formée de trois nappes unidirectionnelles 30a, 30b, 30c faisant avec la direction longitudinale des angles égaux respectivement à 0°, +60° et -60°. La nappe à 0° (nappe 30a), ou nappe principale, est une nappe unidirectionnelle cohérente telle qu'obtenue selon le procédé décrit ci-avant, dévidée d'une bobine 40a. Les nappes transversales à +60° (nappe 30b et -60° (nappe 30c) sont des nappes unidirectionnelles qui peuvent aussi être des nappes cohérentes obtenues selon le procédé décrit ci-avant et qui sont dévidées de bobines respectives 40b, 40c. Les nappes unidirectionnelles utilisées peuvent avoir ou non la même largeur. Ainsi, dans l'exemple, les nappes transversales 30b et 30c ont une même largeur inférieure à celle de la nappe longitudinale 30a. D'une façon générale, on utilisera plutôt des nappes transversales ayant une largeur inférieure à celle de la nappe principale (0°).

On notera que les angles formés par les nappes transversales avec la nappe à 0° peuvent être autres que +60° et -60°, par exemple +45° et -45° ou, plus généralement, des angles de préférence de signes opposés mais non nécessairement égaux. On notera aussi que plus de deux nappes transversales peuvent être superposées avec la nappe à 0°, par exemple en ajoutant une nappe à 90° et/ou en ajoutant au moins une autre paire de nappes formant des angles opposés par rapport à la direction longitudinale.

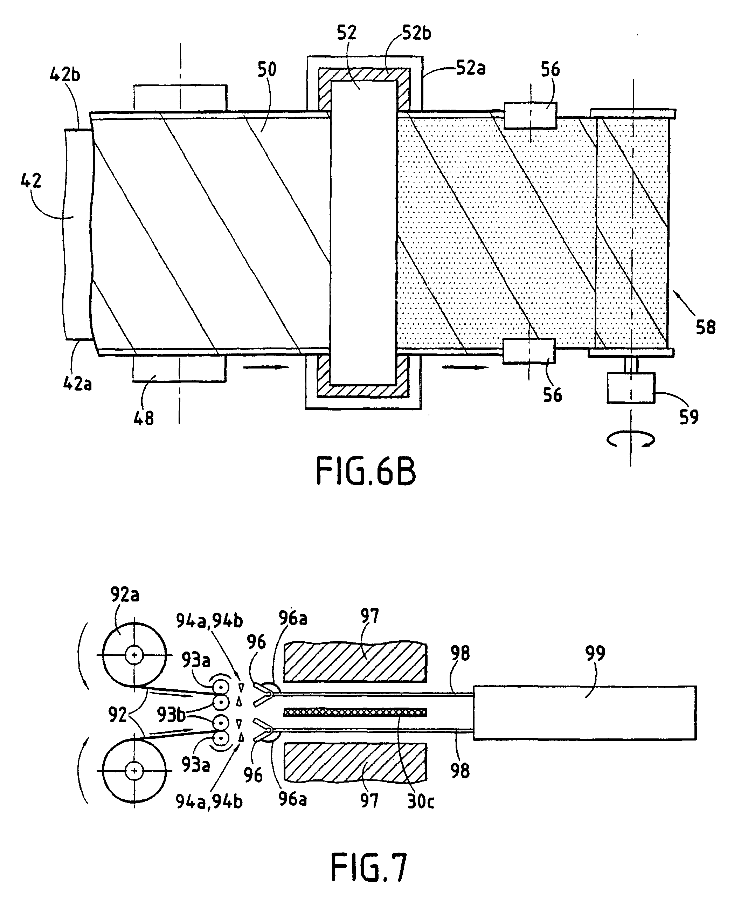

Comme le montre la Figure 6A, la nappe multiaxiale 50 est formée sur un support constitué par le brin supérieur horizontal d'un tapis sans fin 42 d'un convoyeur 44 passant sur un rouleau d'entraînement 46 mû par un moteur 47, et sur un rouleau de renvoi 48 (Figure 6B). On notera que le tapis 42 a une largeur inférieure à celle de la nappe 50 de sorte que celle-ci dépasse légèrement sur chaque côté 42a, 42b du tapis 42.

La nappe est réalisée en amenant sur le tapis 42 des segments juxtaposés de la nappe 30b, orientés à +60°, puis en déposant par dessus la nappe 30a orientée à 0° et en amenant ensuite au-dessus de celle-ci des segments juxtaposés de la nappe 30c orientée à -60°. C'est une particularité avantageuse que de pouvoir réaliser une nappe multiaxiale 50 dans laquelle la nappe à 0° est située entre les nappes transversales, conférant ainsi à la nappe 50 un caractère symétrique. Cela est rendu possible grâce à la cohésion intrinsèque de la nappe 30a.

Avantageusement encore, la nappe unidirectionnelle à 0°, telle qu'obtenue par un procédé tel que décrit plus haut, a une largeur relativement grande, au moins égale à 5 cm, de préférence au moins égale à 10 cm, ce qui permet de réaliser des nappes multiaxiales de grande largeur.

Les dispositifs 60 d'amenée, de découpe et de dépôt de segments successifs des nappes 30b et 30c sont identiques, de sorte que seul celui associé à la nappe 30c sera décrit.

La nappe 30c est dévidée de la bobine 40c au moyen d'une tête de préhension 70 comprenant au moins une pince pouvant enserrer l'extrémité libre de la nappe 30c.

La nappe 30c est tirée depuis un bord 42a du tapis de convoyeur 42 sur une longueur suffisante pour couvrir la largeur de la nappe longitudinale. Le segment ainsi amené est découpé dans la direction longitudinale, au niveau du bord de la nappe 30a situé du côté du bord 42a du tapis de convoyeur, au moyen d'un dispositif de coupe 80. Dans le même temps, le segment de nappe 30c découpé est fixé, au moins à son extrémité qui vient d'être découpée, pour conserver sa position sur le tapis de convoyeur par rapport au segment précédemment amené, ainsi que par rapport aux nappes 30a, 30b déjà déposées.

Afin de réaliser une coupe de la nappe 30c sans effilochage ou déformation, un renfort local sous forme d'un tronçon de film ou ruban 92 est fixé sur chaque face de la nappe 30c à chaque endroit où celle-ci doit être découpée. Le film 92 est fixé par exemple par collage, thermocollage, soudage haute fréquence, soudage ultrason, ..., au moyen d'un dispositif 90. On utilise par exemple un film polyéthylène pouvant être fixé par thermocollage. On notera qu'un film de renfort pourra être fixé sur une face seulement de la nappe 30c.

La tête de préhension 70 est portée par un bloc 62 qui coulisse dans une glissière 64 d'une poutre 66. Le bloc 62 est par exemple fixé sur un câble sans fin 68 mû dans la glissière 64 par un moteur réversible 69. La poutre 66 supporte la bobine 40c, ainsi que les dispositifs 80 et 90 de coupe et de dépôt de segments de nappe, et de pose de film(s) de renfort.

Une description détaillée de modes de réalisation de la tête 70 et des dispositifs 80 et 90 est donnée plus loin. On notera que la tête de préhension peut être montée orientable par rapport au bloc 62, de même que les dispositifs 80 et 90 par rapport à la poutre 66. De la sorte, l'angle que forme la nappe transversale déposée par rapport à la direction longitudinale (0°) peut être aisément modifié en ajustant de façon correspondante l'orientation de la poutre 66 et en réglant la position de la tête 70 et des dispositifs 80, 90 par rapport à la poutre. Le fonctionnement de la tête 70 et des dispositifs 80, 90 est commandé par une unité de commande 100 à laquelle ils sont reliés par un faisceau de câbles 102, le long de la poutre 66.

Un segment de chaque nappe 30b et 30c est amené, découpé, déposé et fixé, tandis que le convoyeur 44 est à l'arrêt. Ensuite, une avance du convoyeur est commandée sur une longueur égale à la dimension des nappes 30b et 30c mesurée en direction longitudinale (0°) et le processus est réitéré. A chaque avance du convoyeur 44, la nappe longitudinale est dévidée d'une même longueur.

Après leur superposition, les nappes 30a, 30b, 30c sont liées entre elles. Dans l'exemple illustré par la Figure 6B, cette liaison est réalisée par aiguilletage au moyen d'une planche à aiguilles 52 qui s'étend sur toute la largeur de la nappe multiaxiale 50, en sortie du convoyeur 44. Lors de l'aiguilletage, la nappe 50 est supportée par un plateau 52a revêtu d'un feutre d'embase 52b, par exemple en polypropylène, dans lesquels les aiguilles peuvent pénétrer sans être endommagées. L'aiguilletage est réalisé lors de chaque avance du convoyeur. La liaison par aiguilletage est plus particulièrement adaptée dans le cas de nappes formées de filaments discontinus ou de filaments continus non susceptibles d'être trop endommagés par l'aiguilletage.

Un voile de fibres discontinues peut être apporté sur la nappe multiaxiale immédiatement avant aiguilletage, afin de fournir des fibres discontinues pouvant être prélevées par les aiguilles pour être introduites transversalement dans la nappe multiaxiale et lier celle-ci.

Après aiguilletage, les zones marginales de la nappe multiaxiale 50, portant des parties de film de renfort 92, peuvent être éliminées par découpe au moyen de molettes rotatives 56 situées de chaque côté de la nappe. La nappe multiaxiale ainsi obtenue peut être stockée sur une bobine 58 mue par un moteur 59, en synchronisme avec l'avance intermittente du convoyeur 44.

On se réfère maintenant à la Figure 7 montrant de façon plus détaillée, mais très schématique, le dispositif 90 de pose de films de renfort 92 par thermocollage.

Chaque film 92 est tiré d'une bobine de stockage respective 92a et passe entre deux galets 93a, 93b, l'un, par exemple 93a, étant couplé à un moteur d'entraînement (non représenté) qui peut être commun aux deux galets 93a. Deux pinces 96 dont l'ouverture et la fermeture sont commandées par des actionneurs 96a, sont fixées aux extrémités de tiges 98 solidaires d'un même cylindre d'un vérin pneumatique 99. Les deux tiges 98 s'étendent respectivement au-dessus et au-dessous du trajet de la nappe 30c tirée de la bobine 40c et ont une longueur supérieure à la largeur de la nappe.

Deux presses chauffantes 97 sont disposées de part et d'autre du trajet de la nappe 30c. Deux lames 94a, coopérant avec des contre-lames 94b, sont disposées immédiatement en aval des paires de galets 93a, 93b pour pouvoir sectionner les films 92 sous la commande d'actionneurs (non représentés).

Un cycle de pose de films de renfort 92 comprend les opérations suivantes illustrées par les Figures 8A à 8C.

Les tiges 98 portant les pinces 96 étant dans la position la plus avancée, au-delà du bord de la nappe 30c opposé à celui du côté duquel se trouve le vérin 99, les films 92 sont avancés au moyen des galets 93a, 93b, jusqu'à ce que leur extrémité libre parvienne au fond des pinces 96 qui sont en position ouverte (Figure 8A). L'arrêt des galets d'entraînement 93a peut être commandé soit en réponse à la détection de l'arrivée des extrémités des films 92 au fond des pinces 96 par des capteurs appropriés, soit après avance d'une longueur prédéterminée des films.

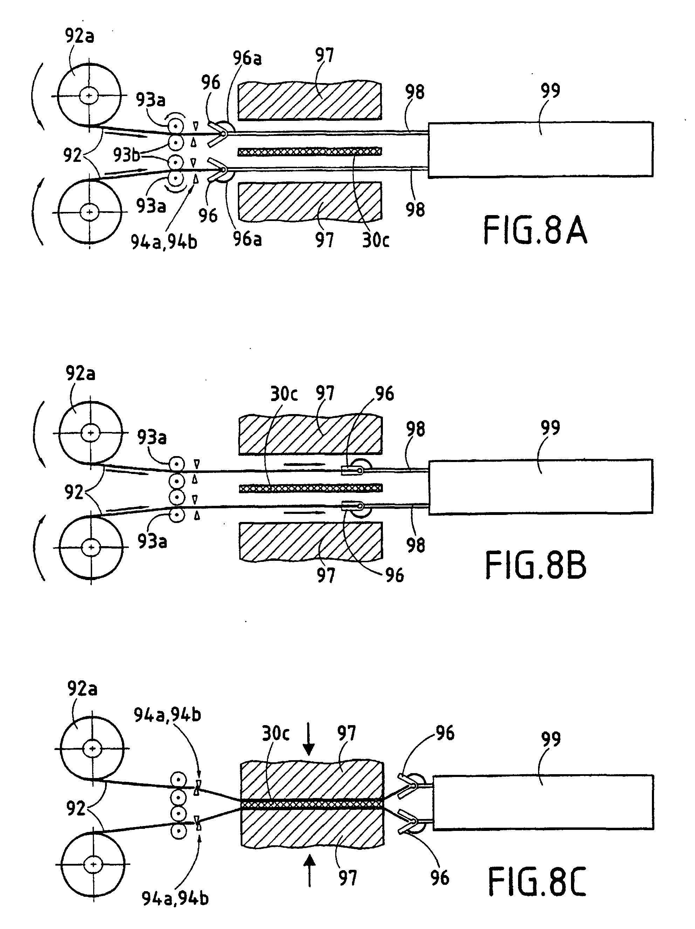

Les pinces 96 sont fermées sous la commande des actionneurs 96a, les galets 93a sont débrayés et le vérin 99 est commandé pour rétracter les tiges 98 et tirer les films 92 jusqu'au-delà du bord de la nappe 30c du côté duquel est situé le vérin 99 (Figure 8B).

Les presses chauffantes 97 sont appliquées de part et d'autre de la nappe 30c, contre les tronçons de films 92 situés sur chaque face de cette nappe afin de fixer ces tronçons par thermocollage. Dès l'application des presses 97, les pinces 96 sont ouvertes et les lames 94a sont actionnées afin de sectionner les films 92, de sorte que les tronçons de films posés sont libérés lors du thermocollage (Figure 8C).

Après retrait des presses 97 et avance de la nappe 30c, les tiges 98 sont à nouveau amenées en position avancée par le vérin 99 et le cycle de pose peut ensuite redémarrer.

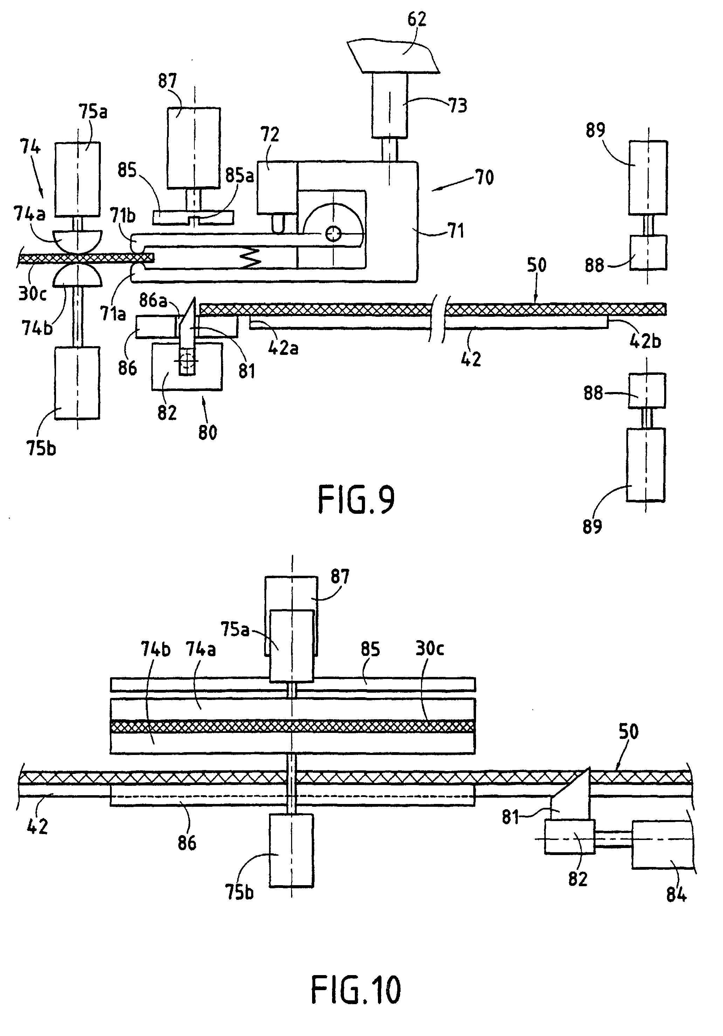

On se réfère maintenant aux Figures 9 et 10 qui montrent de façon détaillée, mais très schématique, la tête de préhension 70 et le dispositif 80 de coupe et de fixation de segments de nappe transversale. La tête de préhension 70 comprend une pince 71 avec deux éléments 71a, 71b destinés à saisir l'extrémité libre de la nappe 30c. La fermeture et l'ouverture de la pince 71 sont commandées par un actionneur 72 qui agit sur l'élément supérieur 71a. En outre, la pince 71 est mobile entre une position rapprochée du plan du tapis de convoyeur 42 et une position écartée de ce plan sous la commande d'un autre actionneur 73 qui est fixé au bloc 62 et supporte la pince 71.

Au voisinage du bord 42a du tapis de convoyeur 42 situé du côté où la nappe 30c est amenée, est situé un dispositif de guidage 74 sous forme d'une pince. Celle-ci comprend un élément supérieur 74a mobile sous la commande d'un actionneur 75a entre une position haute écartée du plan du tapis de convoyeur 42 et une position basse située pratiquement dans ce plan. La pince 74 comprend en outre un élément inférieur 74b mobile sous la commande d'un actionneur 75b entre une position basse située pratiquement dans le plan du tapis de convoyeur 42 et une position haute écartée de ce plan.

Le dispositif de coupe 80 comprend une lame 81 montée sur un support 82 situé sous le plan du tapis de convoyeur 42. Le support 82 peut coulisser le long du bord 42a du tapis 42 sous la commande d'un actionneur 84. Un dispositif de pressage 85 est disposé au-dessus du plan du tapis de convoyeur 42 afin d'appliquer la nappe 30c sur un support 86 lors de la découpe du segment de nappe. L'application ou le retrait du dispositif de pressage 85 sont commandés par un actionneur 87. Le support 86 et le dispositif de pressage 85 présentent chacun une fente, respectivement 86a, 85a permettant le passage de la lame 81.

Le dispositif de pressage 85 et le support 86 sont en outre des éléments chauffants afin de constituer une presse chauffante capable d'enserrer les bords de la nappe multiaxiale 50 en cours de formation, du côté 42a du tapis de convoyeur. Une presse chauffante formée de deux éléments semblables 88 commandés par des actionneurs 89 peut être prévue sur le côté opposé 42b du tapis de convoyeur.

La largeur du tapis de convoyeur 42 est inférieure à celle de la nappe multiaxiale 50 en cours de formation de manière à ménager l'espace nécessaire, sur le côté 42a, au dispositif de coupe 80 et, sur le côté 42b, aux presses chauffantes éventuelles 88.

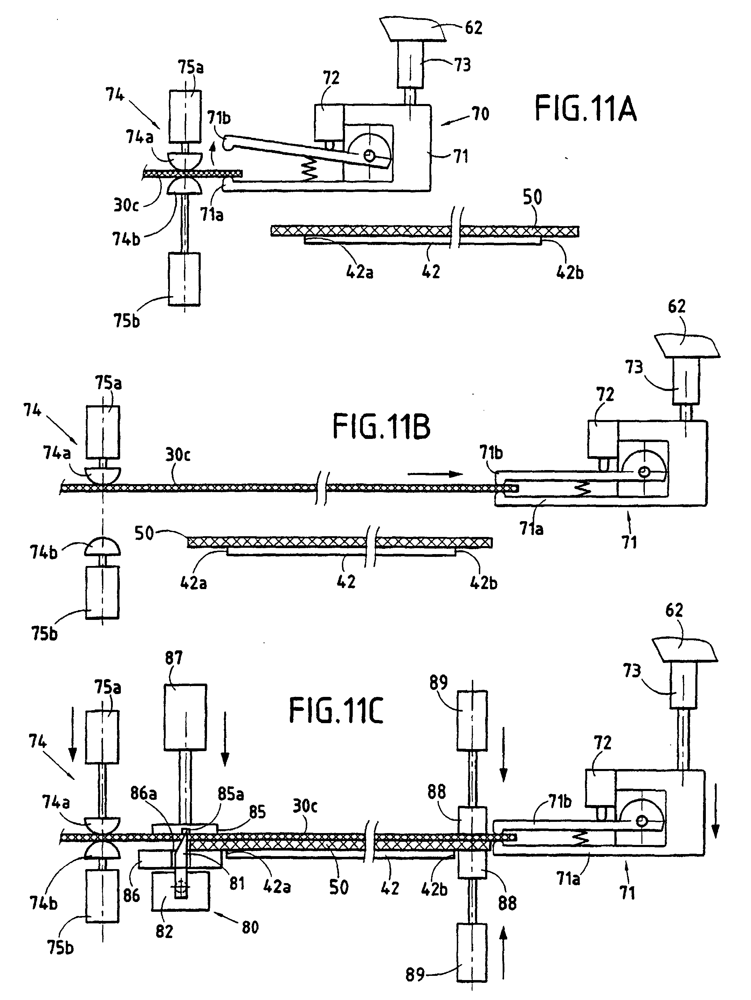

Un cycle d'amenée, de découpe et de fixation d'un segment de nappe transversale 30c comprend les opérations suivantes, illustrées par les Figures 11A à 11C.

L'extrémité libre de la nappe 30c, au voisinage du côté 42a du tapis de convoyeur 42, est maintenue par la pince 74 avec ses éléments 74a, 74b en position haute. La tète de préhension 70 a sa pince 71 en position haute et est située à l'extrémité de sa course du côté 42a du tapis de convoyeur. Dans cette position, la fermeture de la pince 71 peut être commandée par l'actionneur 72 pour saisir l'extrémité de la nappe 30c (Figure 11A).

La pince 74 est ouverte, par abaissement de son élément inférieur 74b et le bloc 62 est déplacé par le moteur 69 pour amener la pince 71 jusqu'à l'autre extrémité de sa course, légèrement au-delà du côté 42b du tapis de convoyeur 42 (Figure 11B).

La pince 71 est abaissée, ainsi que l'élément supérieur 74a de la pince 74, de manière à plaquer le tronçon de nappe 30c contre le tapis de convoyeur 42 supportant déjà les nappes 30b et 30a. Le dispositif de pressage 85 est abaissé au moyen de l'actionneur 87 afin d'appliquer la nappe 30c contre le support 86. La lame 81 est alors déplacée longitudinalement afin de découper la nappe 30c (Figure 11C). La nappe 30c est découpée à l'emplacement où les films de renfort 92 ont été fixés, la distance entre les dispositifs de pose de films de renfort 90 et de coupe 80 de nappe transversale étant égale au pas d'avance transversal de la nappe 30c, c'est-à-dire à la longueur du segment de nappe 30c à découper.

Les éléments chauffants 85 et 86 sont commandés pour produire la chaleur nécessaire au thermocollage de la portion découpée des films de renfort 92 sur le bord de la nappe multiaxiale situé du côté 42a du tapis de convoyeur 42, afin de fixer, de ce côté, la position du segment de nappe 30c découpé. Les autres portions des films 92 qui restent solidaires de l'extrémité libre de la nappe 30c, après découpe, peuvent être thermocollées au moyen des presses 88, de l'autre côté de la nappe multiaxiale 50. De la sorte, chaque segment découpé de la nappe 30c est maintenu en position par rapport au reste de la nappe multiaxiale en cours de formation. On évite ainsi un déplacement intempestif des segments de nappe transversale lors des avances du tapis de convoyeur 42 avant fixation définitive de la nappe multiaxiale.

La pince 71 peut alors être ouverte et ramenée en position haute avant d'être déplacée vers le côté 42a du tapis de convoyeur, tandis que la pince 74 est ramenée en position haute pour présenter l'extrémité libre de la nappe 30c dans la position voulue à la tête de préhension.

### Variantes de réalisation

La machine de nappage décrite plus haut fonctionne avec avance discontinue de la nappe multiaxiale en cours de formation. Afin d'augmenter la cadence de production et d'améliorer la compatibilité avec le fonctionnement des moyens de liaison entre nappes unidirectionnelles superposées, lorsque cette liaison est réalisée par couture ou par tricotage, il pourra être préféré de faire fonctionner la machine de nappage avec avance continue.

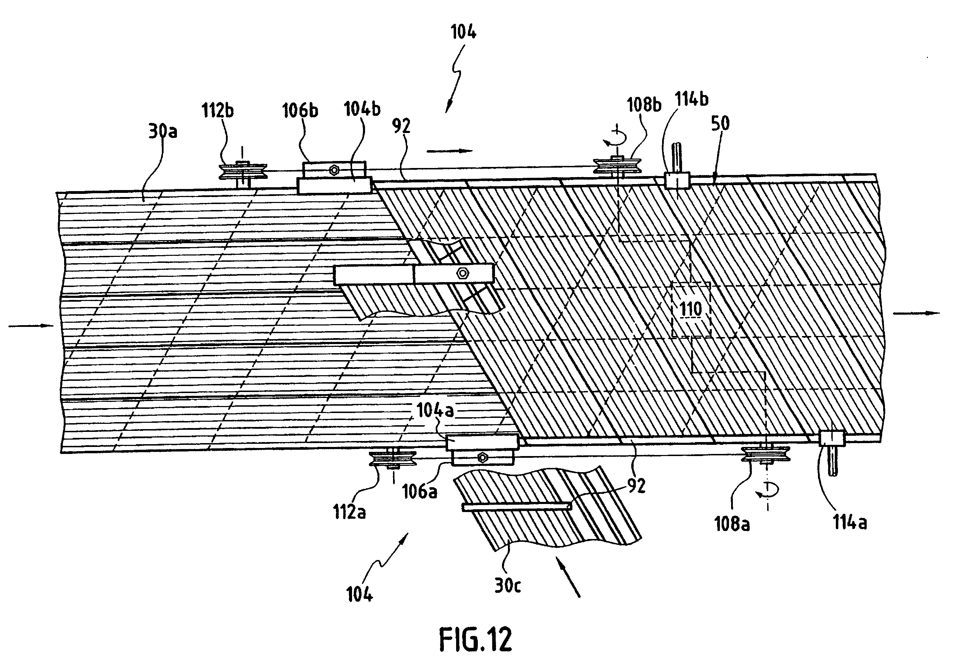

A cet effet (Figure 12), les segments de nappe transversale découpés sont repris par un dispositif de transfert 104 pour être amenés successivement sur la nappe multiaxiale 50 en cours de formation qui avance de façon continue. Le dispositif de transfert 104 comporte deux paires de pinces 104a, 104b portées par des blocs 106a, 106b qui sont mobiles en translation parallèlement à la direction d'avance, de chaque côté du tapis de convoyeur 42. A cet effet, les blocs 106a, 106b sont fixés sur des câbles sans fin qui passent sur des rouleaux d'entraînement 108a, 108b mus par un moteur 110 et sur des rouleaux de renvoi 112a, 112b. Deux paires de galets presseurs chauffants 114a, 114b assurent la fixation d'un segment de nappe transversale par thermocollage des films 92 aux extrémités du segment de nappe, dès que celui-ci est déposé.

L'amenée et la découpe de chaque segment de nappe transversale sont assurées par un dispositif trameur 60 semblable à celui de la machine des Figures 6A-6B, à la différence que le dispositif de coupe 80 est porté par la poutre 66, et que des presses chauffantes pour la fixation des segments de nappe découpés ne sont pas prévues.

Le nappage est réalisé en amenant et coupant chaque segment au moyen du dispositif trameur et en reprenant le segment coupé, dès sa libération par le dispositif trameur, au moyen des pinces 104a, 104b. Celles-ci sont déplacées en synchronisme par le moteur 110, à une vitesse déterminée pour amener le segment coupé au contact de celui précédemment déposé et dans la position désirée (adjacente ou avec recouvrement). Les pinces 104a, 104b sont ensuite ramenées à leur position initiale pour transférer le segment de nappe découpé suivant.

Selon une autre variante, et également dans le but d'augmenter la cadence de production, chaque dispositif trameur, qui réalise l'amenée, la découpe et le dépôt de segments successifs de nappe transversale, comporte plusieurs têtes de préhension déplacées le long d'un trajet en boucle fermée. De la sorte, pendant le trajet de retour d'une tête de préhension, une autre tête de préhension peut être active.

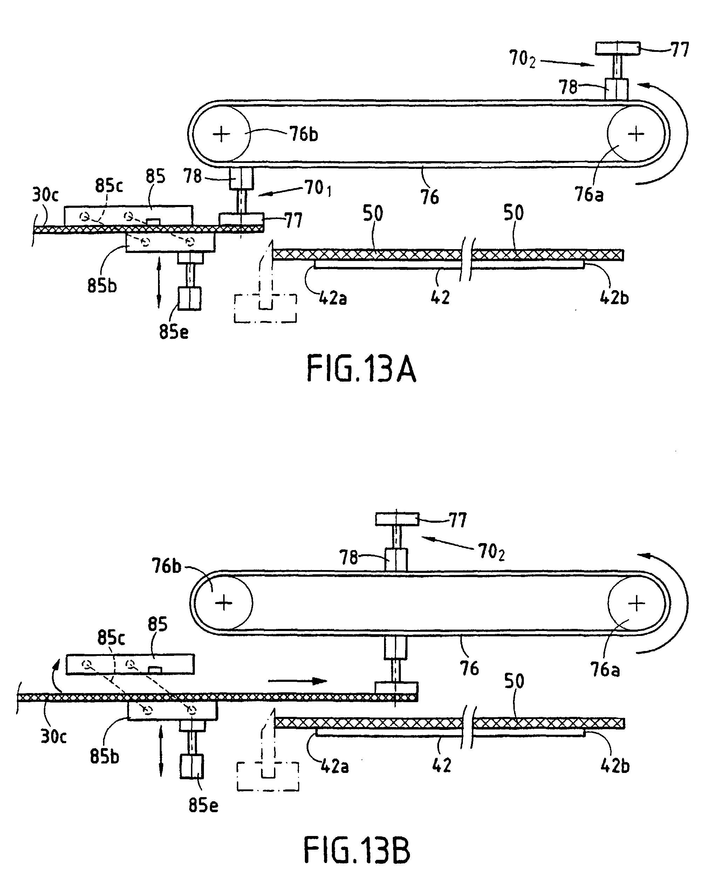

Les figures 13A à 13D illustrent les étapes successives d'amenée, de découpe et de fixation d'un segment de nappe transversale.

Le dispositif trameur se distingue de celui des figures 6A à 11C du fait qu'il comprend plusieurs, par exemple deux, têtes de préhension 70₁, 70₂ montées sur un transporteur sans fin 76 à courroie ou chaîne. Le transporteur 76 a ses brins inférieurs et supérieurs qui s'étendent au-dessus du tapis de convoyeur 42, parallèlement à celui-ci et dans la direction de nappage de la nappe transversale à déposer 30c. Le transporteur 76 passe sur un rouleau d'entraînement 76a et un rouleau de renvoi 76b situés de part et d'autre du tapis de convoyeur 42. Les têtes 70 sont montées en des emplacements opposés sur le transporteur 76.

Chaque tête 70₁, 70₂ comporte un sabot 77 fixé à l'extrémité d'un actionneur 78. La liaison entre une tête de préhension et l'extrémité libre de la nappe 30c est réalisée au moyen d'un adhésif projeté sur le sabot 77 par une buse d'encollage 79 située au-dessus du brin supérieur de transporteur 76, au voisinage de l'extrémité du trajet de retour.

Le dispositif trameur des figures 13A à 13D se distingue aussi de celui des figures 6A à 11C du fait que l'application et le retrait du dispositif de pressage 85 ne sont pas commandés au moyen d'un actionneur mû perpendiculairement à la nappe, mais au moyen d'un montage pivotant. Le dispositif de pressage 85 est relié à un support 85b au moyen de bras articulés 85c. Les bras articulés 85c sont mus par un organe moteur (non représenté) pour déplacer le dispositif de pressage 85, le long d'un arc de cercle, entre une position avant, au-dessus de la lame 81 et une position arrière, dans laquelle le passage d'une tête de préhension est dégagé. le support 85b est mobile sous l'action d'un actionneur 85e entre une position relevée, au-dessus du plan de la nappe 50, et une position abaissée, sensiblement au niveau de la nappe 50. On notera encore que le dispositif de guidage 74 des figures 9 à 11C devient alors superflu. Le fonctionnement est le suivant.

Le support 85b étant en position relevée et le dispositif de pressage 85 en position arrière, une tête de préhension 70₁ sur laquelle de l'adhésif a été projeté vient au contact de l'extrémité libre de la nappe 30c (figure 13A).

Le dispositif de pressage 85 est soulevé au moyen des bras 85c, et le transporteur 76 est entraîné, de sorte que l'extrémité libre de la nappe 30c est amenée en direction du côté 42b du tapis de convoyeur 42, au-dessus de la nappe 50 (figure 13B).

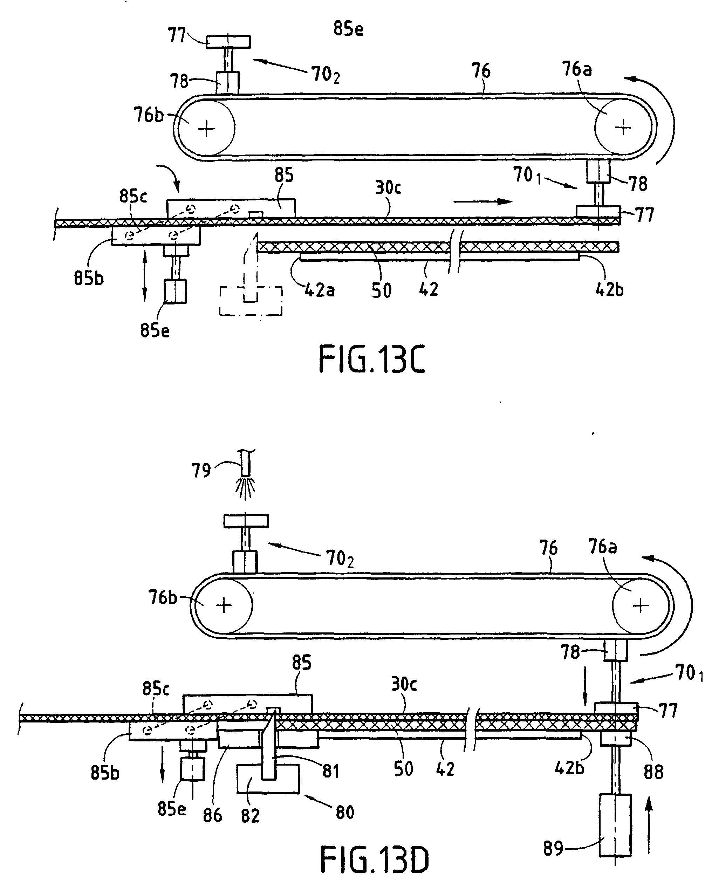

Lorsque l'extrémité libre de la nappe 30c est parvenue en position, le transporteur 76 est arrêté, le dispositif de pressage 85 est basculé en position avant, maintenant la nappe 30c à l'état tendu entre la tête de préhension 70₁ et le dispositif de pressage 85 (figure 13C).

Ensuite, l'actionneur 85e et l'actionneur 78 de la tête 70 sont commandés pour appliquer la nappe 30c sur la nappe 50 (figure 13D). La découpe du segment est alors effectuée au moyen de la lame 81 passant à travers la fente 85a. Simultanément, le collage des bords du segment de nappe découpé est réalisé, au moyen du dispositif de pressage 85 et du support 86, constituant une presse chauffante, et par pression de la tête 70₁ sur l'élément chauffant 88. On note qu'un seul élément chauffant 88 est prévu, contrairement au mode de réalisation de la figure 9. Dans le même temps, de l'adhésif est projeté sur la tête 70₂ au moyen de la buse 79. Ensuite, la tête 70₁ est relevée, puis le transporteur 76 est à nouveau entraîné et un nouveau cycle de dépose peut recommencer avec la tête 70₂.

Dans ce qui précède, il est ainsi envisagé de fixer temporairement les extrémités des segments de nappe transversale par thermocollage le long d'un bord ou des deux bords longitudinaux de la nappe multiaxiale, les parties marginales de celle-ci étant ensuite éliminées.

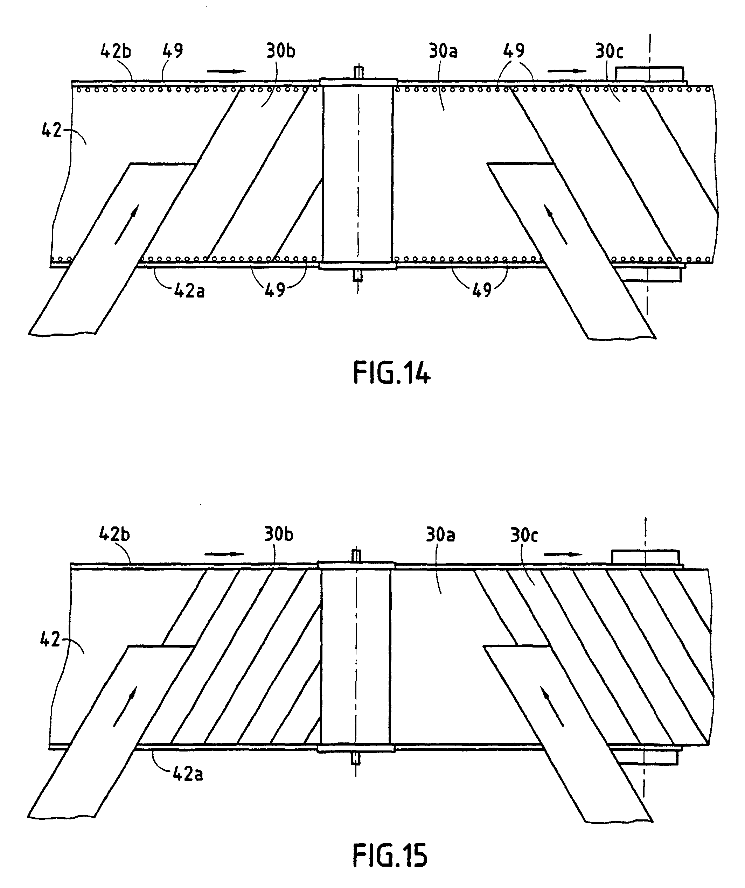

En variante, la fixation temporaire des segments de nappe transversale pourra être assurée au moyen de deux rangées longitudinales de picots 49 le long des bords 42a, 42b du tapis de convoyeur (Figure 14). Les segments de nappe transversale sont enfichés à leurs extrémités sur les picots 49 lorsqu'ils sont plaqués contre le tapis de convoyeur 42 par l'abaissement des pinces 71, 74, ou au moyen du dispositif de transfert de la Figure 12.

Selon une autre variante, les segments successifs de nappe transversale peuvent être disposés non pas de façon adjacente, mais avec un recouvrement partiel (Figure 15). Le degré de recouvrement est réglé en ajustant la vitesse du convoyeur 44 entre deux amenées de segments successifs de nappe transversale. Un tel recouvrement partiel permet d'éviter les difficultés susceptibles d'être rencontrées pour la disposition des segments de nappes transversales bord à bord. On utilise alors des nappes transversales de faible masse surfacique, telles qu'elles peuvent être obtenues après avoir été élargies comme montré par la Figure 5.

Bien que le mode de nappage des nappes transversales par amenée de segments successifs, tel que décrit ci-avant constitue un mode préféré de mise en oeuvre de l'invention, la possibilité d'utiliser d'autres techniques de nappage, notamment lorsque les nappes transversales sont de largeur relativement petite, n'est pas exclue.

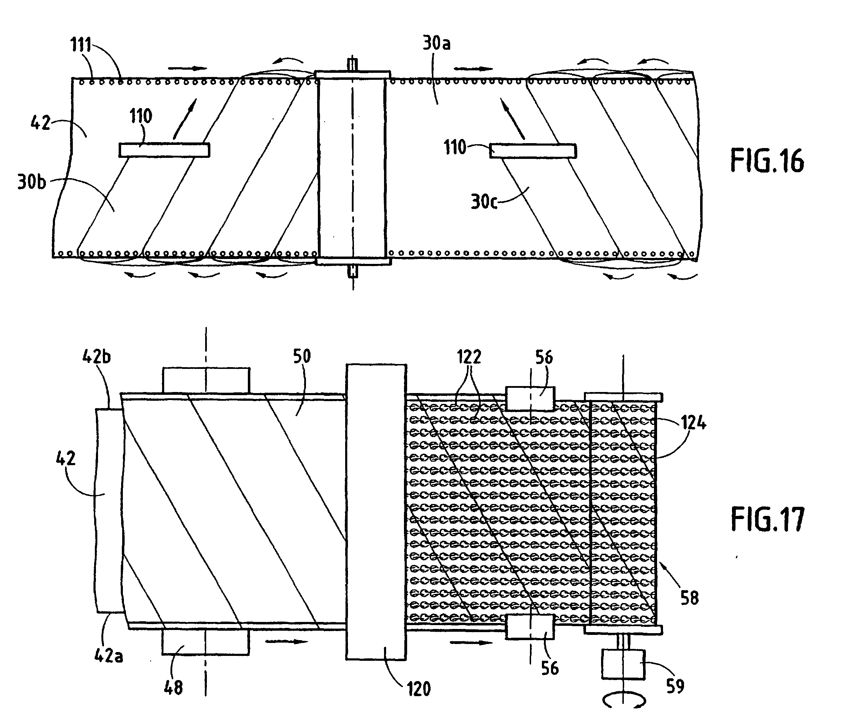

Ainsi, comme le montre très schématiquement la Figure 16, on pourra utiliser une technique d'un type semblable à celle décrite dans le document US-A4 677 831 déjà évoqué. Selon cette technique, les extrémités des nappes transversales 30b, 30c sont fixées sur des chariots trameurs 110 qui sont animés d'un mouvement alternatif en translation parallèlement aux directions des nappes transversales. Les nappes 30b, 30c sont dévidées de bobines (non représentées) portées ou non par les chariots trameurs. A chaque extrémité de course d'un chariot trameur, la nappe transversale est retournée par passage sur des picots 111 portés par le tapis de convoyeur 42 le long de chacun de ses côtés longitudinaux.

La Figure 6B montre une liaison des nappes superposées par aiguilletage. D'autres modes de liaison peuvent être utilisés.

Ainsi, la Figure 17 montre une liaison par couture au moyen d'un dispositif 120 situé immédiatement en aval du convoyeur 44. La couture peut être réalisée avec différents points, par exemple un point de chaînette 122, comme connu en soi. Le fil de couture 124 utilisé est par exemple un fil polyester, verre, carbone, aramide,... Il est également possible de réaliser une liaison par tricotage, par exemple en utilisant un point de tricot zig-zag.

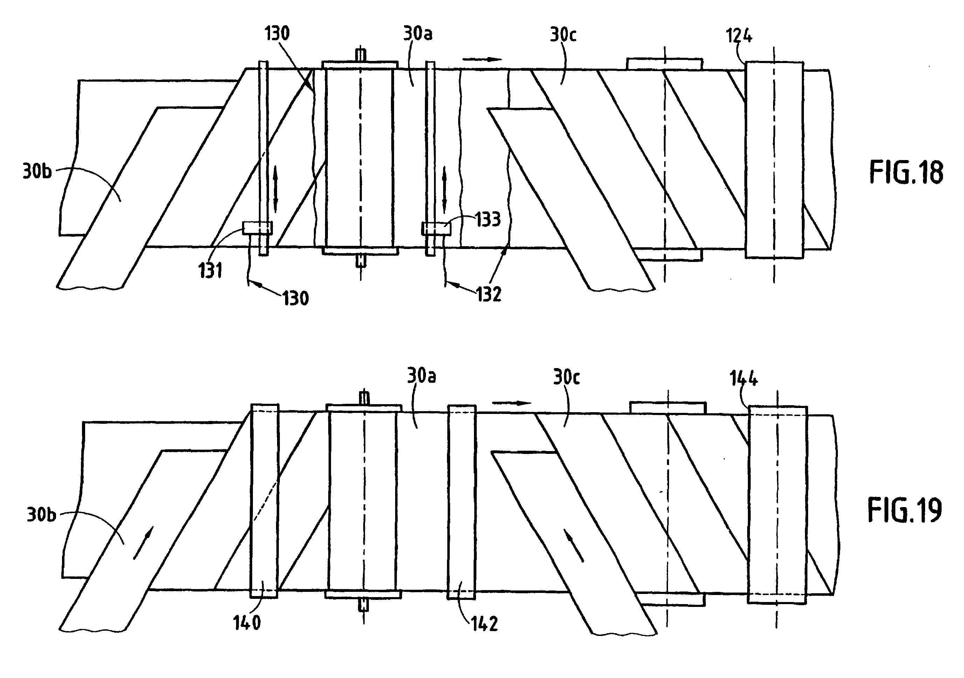

Quant à la Figure 18, elle montre une liaison au moyen de fils thermofusibles qui sont introduits entre les nappes unidirectionnelles. Un premier fil thermofusible 130 est disposé sur les segments de nappe 30b, avant dépôt de la nappe 30a, au moyen d'un dispositif trameur 131, et un deuxième fil thermofusible 132 est disposé sur la nappe 30e, avant dépôt des segments de nappe 30c, au moyen d'un dispositif trameur 133. Immédiatement en aval du convoyeur 44, la nappe multiaxiale 50 passe entre deux rouleaux chauffants 124 réalisant la fusion des fils 130, 132 et, par là même, la cohésion de la nappe multiaxiale. Les fils 130, 132 sont par exemple des fils de verre enduits de polypropylène. A la place des fils thermofusibles, on pourra utiliser un film thermofusible, ou un fil ou film thermocollant.

Enfin, la Figure 19 montre une liaison par collage. Des rampes de projection d'agent de collage 140, 142 sont disposées en travers du tapis de convoyeur 42, immédiatement en aval du poste de dépôt de la nappe unidirectionnelle 30a et du poste de dépôt de la nappe unidirectionnelle 30c. Immédiatement en aval du convoyeur 44, la nappe multiaxiale 50 passe entre deux rouleaux 144.

Lorsque la cohésion des nappes unidirectionnelles a été obtenue par un agent de liaison thermofusible ou thermocollant, la liaison entre les nappes unidirectionnelles pourra aussi être obtenue par réactivation thermique de l'agent de liaison.

Le procédé et la machine de nappage décrits permettent de réaliser des nappes multiaxiales comprenant un nombre quelconque de nappes superposées. Ainsi, il est possible de former une nappe multiaxiale dépourvue de nappe unidirectionnelle longitudinale (0°), en disposant au moins deux nappes unidirectionnelles transversales. Dans ce cas, de préférence, les nappes transversales comprennent au moins une paire de nappes dont les directions font des angles opposés avec la direction longitudinale, et éventuellement une nappe transversale à 90°. Dans le cas où une nappe unidirectionnelle longitudinale est prévue, comme déjà indiqué, on dispose au moins une paire de nappes transversales situées de part et d'autre de la nappe longitudinale en faisant des angles opposés avec celle-ci ; il est possible là aussi d'adjoindre au moins une nappe transversale à 90°.

Les nappes multiaxiales obtenues peuvent être utilisées pour la réalisation de renforts de pièces en matériau composite, par exemple par des techniques bien connues de drapage ou d'aiguilletage de strates superposées. Les renforts réalisés sont alors densifiés par une matrice obtenue par infiltration chimique en phase vapeur ou par voie liquide (imprégnation par un précurseur de la matrice à l'état liquide, par exemple une résine, et transformation du précurseur, par exemple par traitement thermique), ou encore par caléfaction. Dans ce dernier cas, la préforme est immergée dans un liquide précurseur de la matrice et la préforme est chauffée par exemple par contact avec un induit ou par couplage direct avec un inducteur, de sorte que le précurseur est vaporisé au contact de la préforme et peut s'infiltrer pour former la matrice par dépôt au sein de la porosité de la préforme.

### EXEMPLES

Des exemples de réalisation de nappes multiaxiales seront maintenant décrits à titre illustratif.

### Exemple 1

Un câble de fibres de carbone de haute résistance formé de 480 000 filaments continus (480K) et de titre 30 000 tex, ayant une résistance à rupture en traction de 3600 MPa et un module de 250 GPa est étalé sur une largeur de 150 mm au moyen d'un embarrage semblable à celui de la Figure 1. Le câble étalé est soumis à une opération d'étirage-craquage au cours de laquelle les filaments continus sont transformés en filaments discontinus de longueur comprise majoritairement entre 25 mm et 170 mm. Lors du craquage, le câble étalé subit un étirage par un facteur de 2 et sa masse surfacique est réduite, donnant une nappe unidirectionnelle de 150 mm de large et de 110g/m² de masse surfacique.

La nappe est fixée par légère désorientation des fibres, la grande majorité restant parallèle à la direction de la nappe. Cette désorientation est réalisée en soumettant la nappe située au-dessus d'un tapis métallique à un jet d'eau sous pression minimale de 100 bars.

La nappe obtenue est parfaitement manipulable.

Deux nappes unidirectionnelles similaires sont nappées au moyen d'une machine semblable à celle illustrée par les Figures 6A et 6B en formant des angles de +45° et -45° par rapport à la direction longitudinale (0°) de la nappe réalisée. Les nappes sont liées les unes aux autres par aiguilletage léger, la densité d'aiguilletage étant d'environ 20 coupe/cm². On obtient une nappe biaxiale ±45° ayant une masse de 220g/m².

Des strates sont découpées dans la nappe biaxiale et superposées afin de réaliser un renfort de pièce en matériau composite carbone-carbone à fabriquer. Les strates sont liées entre elles par aiguilletage au fur et à mesure de leur superposition, comme cela est bien connu en soi, par exemple du document US-A-4 790 052.

La préforme obtenue est densifiée par une matrice de carbone déposée par infiltration chimique en phase vapeur.

### Exemple 2

La nappe biaxiale de l'Exemple 1 est fixée non pas par aiguilletage, mais par couture avec un point de tricot zigzag parallèlement à la direction longitudinale. Le fil de tricotage est un fil de coton de 150 dtex à deux brins. On obtient une nappe biaxiale parfaitement manipulable.

### Exemple 3

Le câble de l'Exemple 1 étalé et fixé par jet d'eau après étirage-craquage est élargi par passage sur des barres cintrées pour augmenter sa largeur de 80 à 120 mm. Deux nappes unidirectionnelles semblables ainsi obtenues sont nappées à +45° et -45° comme dans l'Exemple 1, mais avec un recouvrement de 50% des tronçons de nappes successivement déposés. La nappe biaxiale est fixée par aiguilletage, comme dans l'Exemple 1. On obtient une nappe biaxiale de masse surfacique égale à 530g/m² parfaitement manipulable.

### Exemple 4

Quatre câbles de 320 K filaments formés de fibres de carbone discontinues sont étalés côte à côte pour former une nappe unidirectionnelle de 600 mm de large et de masse surfacique égale à environ 140g/m². La nappe est fixée par préaiguilletage avec une densité de 30 coups par cm².

Trois nappes unidirectionnelles similaires sont nappées dans des directions respectivement égales à 0°, +60° et -60° au moyen d'une machine de nappage telle qu'illustrée par les Figures 6A-6B. Les nappes sont liées entre elles par aiguilletage, avec une densité de 30 coups par cm². La nappe triaxiale obtenue a une masse surfacique de 420g/m². Elle convient particulièrement pour la réalisation de préformes de pièces en matériau composite, par empilement et aiguilletage de strates à plat, ou par enroulement et aiguilletage sur un mandrin.

### Exemple 5

Quatre câbles de carbone haute résistance de 50K filaments à précurseur polyacrylonitrile (PAN) préoxydé sont étalés et craqués ensemble comme décrit à l'Exemple 1. La bande unidirectionnelle obtenue a une largeur de 8 cm et une masse surfacique de 170g/m².

Un câble de fibres de carbone de 320K filaments, à précurseur brai isotrope, est craqué de la même façon de manière à obtenir une bande unidirectionnelle de largeur 8 cm et de masse surfacique de 230g/m².

Deux bandes craquées de ce type à précurseur brai isotrope sont intercalées avec huit bandes craquées du type précédent à précurseur PAN préoxydé et l'ensemble est passé en une seule fois dans un gill-box ou une machine type "lntersecting" où l'ensemble des dix bandes est peigné et étiré de façon à obtenir une nappe craquée composée d'un mélange intime de fibres de précurseurs différents, de masse surfacique égale à 250g/m² et de largeur égale à 10 cm.

La nappe hybride obtenue est fixée en étant soumise à un jet d'eau sous pression, alors que la nappe est située au-dessus d'un tapis métallique.

Une nappe triaxiale à 0°, +60° et -60° est réalisée en utilisant trois nappes unidirectionnelles ainsi constituées.

### Exemple 6

Des câbles de fibres de carbone haute résistance de 12 K filaments sont étalés de manière à amener leur largeur à environ 7 mm. Trois nappes unidirectionnelles de largeur égale à environ 100 mm et de masse surfacique égale à 125g/m² sont formées par juxtaposition de câbles étalés, ainsi qu'une nappe unidirectionnelle de largeur égale à 100 cm et de même masse surfacique. La fixation des nappes est réalisée par projection d'un agent de liaison sous forme liquide comme illustré par la Figure 1. L'agent de liaison utilisé est un alcool polyvinylique (PVA) soluble dans l'eau. Le taux de PVA utilisé est de 2,1% en masse par rapport à la masse des nappes.

Une nappe multiaxiale est réalisée avec une machine du type de celle illustrée par les Figures 6A et 16 en utilisant la nappe unidirectionnelle de 100 cm de large comme nappe longitudinale (0°) et les nappes unidirectionnelles de 100 mm de large comme nappes transversales disposées dans des directions 90°, +45°, et -45°, la séquence étant 90°/+45°/0°/-45°. Les quatre nappes sont liées entre elles par couture avec un fil polyester continu de 76 dtex. Une jauge de 6 est utilisée et le point type chaînette au pas de 4 mm est retenu.

Après liaison des nappes unidirectionnelles, la nappe multiaxiale est désensimée pour éliminer le PVA et la rendre compatible avec les utilisations envisagées.

Une telle nappe multiaxiale peut par exemple être préimprégnée avec une résine époxy pour former des pièces en matériau composite.

### Exemple 7

Une nappe multiaxiale "miroir" +45°/0°/-45° est réalisée à partir d'une nappe unidirectionnelle longitudinale (0°) en fibres de carbone haut module de type M46JB de la société française SOFICAR et de deux nappes unidirectionnelles transversales (+45°, -45°) en fibres de carbone haute résistance de type T700SC de la société japonaise TORAY.

La nappe 0° est formée par étalement de câbles de 12K filaments jusqu'à une largeur de 3 mm et juxtaposition de câbles étalés jusqu'à obtenir une nappe de 300 mm de large et de masse surfacique de 150g/m².

Les nappes +45° et -45° sont formées par étalement de câbles de 12K filaments jusqu'à une largeur de 8 mm et juxtaposition de câbles étalés jusqu'à obtenir des nappes de 130 mm de large et de masse surfacique de 100g/m².

Les nappes unidirectionnelles sont fixées par immersion dans un bain contenant une résine époxy en émulsion. Les nappes passent entre des rouleaux essoreurs de manière à fixer un taux effectif de résine de 1,8% en masse par rapport à la masse de la nappe.

Le nappage est réalisé dans la séquence +45°/0°/-45°, avec juxtaposition bord à bord des segments de nappes transversales.

La liaison entre les nappes unidirectionnelles est assurée en disposant un fil co-polyamide thermofusible entre les nappes tous les 100 mm, et en faisant passer la nappe multiaxiale entre deux rouleaux chauffants comme montré par la Figure 17.

La nappe multiaxiale obtenue, après imprégnation avec une résine époxy chimiquement compatible avec l'agent de liaison utilisé pour rendre les nappes unidirectionnelles cohérentes, est utilisée pour réaliser des mâts de bateau en composite carbone/époxy.

### Exemple 8

Une nappe triaxiale 90°/+30^{°}/-30° est réalisée à partir de trois nappes unidirectionnelles identiques. Chaque nappe unidirectionnelle est formée par étalement de câbles de fibres de carbone haute résistance de 50K filaments jusqu'à une largeur de 18 mm et juxtaposition de câbles étalés pour obtenir une nappe de 200 mm de large et de masse surfacique de 200g/m². La fixation de la nappe unidirectionnelle est réalisée par projection d'un polymère vinylpyrrolydone en émulsion, dans une quantité correspondant à un taux de 0,8% en masse de produit sec.

Les nappes unidirectionnelles sont superposées en segments juxtaposés bord à bord et liées entre elles par couture au moyen d'un fil polyester de 76 dtex avec un point de couture chaînette. Une jauge de 6 est utilisée avec un pas de couture de 4 mm.

La nappe multiaxiale obtenue peut ensuite être désensimée pour éliminer l'agent de liaison utilisé pour rendre les nappes unidirectionnelles cohérentes.

### Exemple 9

Une nappe multiaxiale 0°/+45°/90°/-45° est réalisée à partir de quatre nappes unidirectionnelles identiques. Chaque nappe unidirectionnelle est formée par étalement de fils en fibres de verre de type "Roving 2400 tex". Les fils étalés sont juxtaposés longitudinalement et maintenus parallèlement les uns aux autres par un fil thermofusible placé transversalement tout les 5 cm environ, de sorte que la nappe unidirectionnelle cohérente ainsi formée a une masse surfacique de 300 g/m² et une largeur de 20 cm.

A partir de ces nappes unidirectionnelles, la nappe multiaxiale 0°/+45°/90°/-45° est formée, les nappes +45°, 90° et -45° étant constituées par des segments juxtaposés bord à bord. Les quatre nappes unidirectionnelles sont liées entre elles par des lignes de couture par fil polyester. Le point de couture a une longueur de 10 mm environ et les lignes de couture sont espacées de 40 mm environ.

On obtient une nappe multiaxiale cohérente en fibres de verre avec une très faible densité de couture, de sorte que la nappe multiaxiale conserve une souplesse suffisante pour être aisément préformée, et présente un état de surface lisse.

### Exemple 10

Une nappe quadriaxiale est réalisée à partir de quatre nappes unidirectionnelles identiques. Chaque nappe unidirectionnelle est formée par étalement de fils de carbone de 12 K filaments fournis par la société japonaise "Toray" sous la référence "T700SC". Les fils étalés sont juxtaposés et maintenus par un fil thermofusible placé transversalement tous les 5 cm environ, de sorte que la nappe unidirectionnelle cohérente ainsi formée a une masse surfacique de 150 g/m² et une largeur de 10 cm.

A partir de ces nappes unidirectionnelles, deux nappes multiaxiales de types A et B sont formées comme suit :
A: 45°/0°/+45°/90°
B: +45°/0°/-45°/90°

Les nappes unidirectionnelles formant ces deux nappes multiaxiales sont maintenues entre elles par couture avec un fil polyester. On réalise une couture faible densité avec un point de couture de longueur 10 mm et des lignes de couture espacées de 25 mm.

Des nappes multiaxiales A et B peuvent être superposées de manière à former un empilement "miroir" comprenant un même nombre de nappes disposées de part et d'autre d'un plan de symétrie longitudinal médian, chaque nappe A ou B étant symétrique d'une nappe B ou A par rapport à ce plan.

Par exemple, on forme un empilement "miroir" comprenant la succession de nappes suivante : A/A/A/B/B/B. Cet empilement est rendu cohérent par couture dans son épaisseur avec un fil aramide, par exemple un fil de "Kevlar" (marque déposée) de 217 dtex, la couture étant réalisée au pas de 5 x 5 mm.

## Revendications

1. Procédé de réalisation d'une nappe fibreuse multiaxiale ayant une direction longitudinale, le procédé comprenant les étapes qui consistent à superposer au moins deux nappes unidirectionnelles amenées dans des directions différentes sur un support mobile dans une direction d'avance parallèle à la direction longitudinale de la nappe multiaxiale à réaliser, au moins l'une des nappes unidirectionnelles étant amenée transversalement à la direction d'avance en segments successifs formant un même angle choisi par rapport à la direction d'avance, et lier les nappes superposées entre elles,
**caractérisé en ce que** l'une au moins des nappes unidirectionnelles, est formée par étalement d'au moins un câble de filaments de manière à obtenir une nappe d'épaisseur sensiblement uniforme, ayant une largeur au moins égale à 5 cm et une masse surfacique au plus égale à 300g/m² et on confère à la nappe unidirectionnelle formée une cohésion transversale lui permettant d'être manipulée préalablement à sa superposition avec au moins une autre nappe unidirectionnelle.

2. Procédé selon la revendication 1, **caractérisé en ce que** pour réaliser au moins l'une des nappes unidirectionnelles, on utilise plusieurs câbles, on étale les câbles pour former des bandes unidirectionnelles et on dispose les bandes les unes à côté des autres pour obtenir une nappe unidirectionnelle ayant largeur au moins égale à 5 cm et une masse surfacique au plus égale à 300g/m².

3. Procédé selon l'une quelconque des revendications 1 et 2, **caractérisé en ce que** les fibres des nappes unidirectionnelles sont en une matière choisie parmi le carbone, des céramiques, des précurseurs de carbone ou de céramiques, des verres et des aramides.

4. Procédé selon la revendication 3, **caractérisé en ce qu'**au moins l'une des nappes unidirectionnelles est obtenue par étalement d'au moins un câble en carbone ayant un nombre de filaments au moins égal à 12 K.

5. Procédé selon l'une quelconque des revendications 1 à 4, **caractérisé en ce que** l'on superpose des nappes unidirectionnelles formées de fibres de matières différentes.

6. Procédé selon l'une quelconque des revendications 1 à 5, **caractérisé en ce qu'**au moins une nappe unidirectionnelle est formée de fibres de plusieurs matières différentes.

7. Procédé selon l'une quelconque des revendications 1 à 6, **caractérisé en ce qu'**au moins l'une des nappes unidirectionnelles est formée de filaments continus.

8. Procédé selon l'une quelconque des revendications 1 à 6, **caractérisé en ce qu'**au moins l'une des nappes unidirectionnelles est formée de filaments discontinus.

9. Procédé selon la revendication 8, **caractérisé en ce qu'**au moins l'une des nappes unidirectionnelles est formée par étalement d'au moins un câble hybride constitué de filaments discontinus de plusieurs matières différentes intimement mélangés.

10. Procédé selon l'uns quelconque des revendications 8 et 9, **caractérisé en ce que** l'on confère une cohésion transversale à la nappe unidirectionnelle par léger entremêlement de filaments discontinus.

11. Procédé selon la revendication 10, **caractérisé en ce que** l'entremêlement est réalisé en soumettant la nappe à un jet d'eau sous pression lors de son passage sur un tapis.

12. Procédé selon l'une quelconque des revendications 1 à 9, **caractérisé en ce que** l'on confère une cohésion transversale à au moins l'une des nappes unidirectionnelles par aiguilletage.

13. Procédé selon l'une quelconque des revendications 10 à 12, **caractérisé en ce que**, après avoir conféré une cohésion transversale à la nappe unidirectionnelle, celle-ci est élargie.

14. Procédé selon l'une quelconque des revendications 1 à 9, **caractérisé en ce que** l'on confère une cohésion transversale à au moins l'une des nappes unidirectionnelles par apport d'un agent chimique de liaison.

15. Procédé selon la revendication 14, **caractérisé en ce que** l'on utilise un agent de liaison éliminable.

16. Procédé selon la revendication 15, **caractérisé en ce que** l'on utilise un agent de liaison soluble dans l'eau.

17. Procédé selon l'une quelconque des revendications 14 à 16, **caractérisé en ce que** l'agent de liaison est apporté par dépôt sur la nappe unidirectionnelle d'une composition liquide contenant l'agent de liaison ou un précurseur de celui-ci.

18. Procédé selon la revendication 17, **caractérisé en ce que** l'agent de liaison est apporté par dépôt sur la nappe unidirectionnelle d'une composition liquide contenant un polymère en solution.

19. Procédé selon la revendication 17, **caractérisé en ce que** l'agent de liaison est apporté par dépôt sur la nappe unidirectionnelle d'une composition liquide contenant une résine, et polymérisation de la résine.

20. Procédé selon l'une quelconque des revendications 17 à 19, **caractérisé en ce que** le dépôt de l'agent de liaison est effectué par projection de la composition liquide sur la nappe unidirectionnelle.

21. Procédé selon l'une quelconque des revendications 17 à 19, **caractérisé en ce que** le dépôt de l'agent de liaison est effectué par trempage de la nappe unidirectionnelle dans un bain contenant la composition liquide.

22. Procédé selon l'une quelconque des revendications 1 à 9, **caractérisé en ce que** l'on confère une cohésion transversale à au moins l'une des nappes unidirectionnelles par fixation d'au moins un fil thermofusible.

23. Procédé selon l'une quelconque des revendications 1 à 22, **caractérisé en ce que** l'on réalise une nappe multiaxiale par superposition de deux nappes unidirectionnelles transversales faisant des angles opposés avec la direction d'avance.

24. Procédé selon l'une quelconque des revendications 1 à 22, **caractérisé en ce que** l'on réalise une nappe multiaxiale par superposition d'au moins deux nappes unidirectionnelles, l'uns des nappes unidirectionnelles étant une nappe longitudinale ayant une direction parallèle à la direction d'avance.

25. Procédé selon la revendication 24, **caractérisé en ce que** l'on réalise une nappe multiaxiale par superposition d'au moins trois nappes unidirectionnelles, l'une des nappes unidirectionnelles étant une nappe longitudinale ayant une direction parallèle à la direction d'avance et au moins deux autres nappes unidirectionnelles étant des nappes transversales dont les directions font des angles différents avec la direction de la nappe longitudinale.

26. Procédé selon la revendication 25, **caractérisé en ce que** la nappe longitudinale est disposée entre deux nappes transversales dont les directions font des angles de signes opposés avec la direction de la nappe longitudinale.

27. Procédé selon l'une quelconque des revendications 24 à 26 **caractérisé en ce que** la nappe longitudinale est réalisée en disposant les unes à côté des autres plusieurs bandes unidirectionnelles obtenues chacune par étalement d'un câble de manière à obtenir une nappe longitudinale de largeur au moins égale à 10 cm.

28. Procédé selon la revendication 27, **caractérisé en ce que** la nappe longitudinale est réalisée en disposant les unes à côté des autres plusieurs bandes unidirectionnelles obtenues chacune par étalement d'un câble en carbone ayant un nombre de filaments au moins égal à 12 K.

29. Procédé selon l'une quelconque des revendications 1 à 28, **caractérisé en ce qu'**au moins l'une des nappes unidirectionnelles est amenée transversalement à la direction d'avance en segments successifs disposés de façon à être adjacents.

30. Procédé selon l'une quelconque des revendications 1 à 28, **caractérisé en ce qu'**au moins l'une des nappes unidirectionnelles est amenée transversalement à la direction d'avance en segments successifs disposés avec recouvrement partiel.

31. Procédé selon l'une quelconque des revendications 1 à 30, **caractérisé en ce qu'**au moins l'une des nappes unidirectionnelles est amenée transversalement à la direction d'avance et est déposée en segments successifs en faisant avancer la nappe unidirectionnelle transversale sur une longueur sensiblement égale à la dimension de la nappe multiaxiale mesurée parallèlement à la direction de la nappe unidirectionnelle transversale, en découpant un segment dans la nappe ainsi avancée, et en déposant le segment découpé sur le support mobile ou la nappe multiaxiale en cours de réalisation.

32. Procédé selon la revendication 31, **caractérisé en ce que** le support mobile est déplacé de façon continue dans la direction d'avance pendant le dépôt de segments successifs d'au moins une nappe unidirectionnelle transversale et la réalisation de la nappe multiaxiale.

33. Procédé selon l'une quelconque des revendications 31 et 32, **caractérisé en ce que** la nappe unidirectionnelle transversale est renforcée localement dans les zones où elle est découpée.

34. Procédé selon la revendication 33, **caractérisé en ce que** la nappe unidirectionnelle transversale est renforcée par fixation d'un film sur au moins une de ses faces.

35. Procédé selon la revendication 34, **caractérise en ce que** la nappe unidirectionnelle transversale est renforcée par fixation d'un film thermocollant et chauffage sous pression.

36. Procédé selon l'une quelconque des revendications 31 à 35, **caractérisé en ce que** l'on maintient les nappes unidirectionnelles les unes par rapport aux autres au moins jusqu'à la liaison des nappes unidirectionnelles superposées.

37. Procédé selon la revendication 36, **caractérisé en ce que** le maintien des nappes unidirectionnelles est réalisé par fixation sur des picots.

38. Procédé selon la revendication 36, **caractérisé en ce que** le maintien des nappes unidirectionnelles est assuré par fixation d'au moins un film le long de chaque bord longitudinal de la nappe multiaxiale en cours de réalisation.

39. Procédé selon l'une quelconque des revendications 34 et 35, **caractérisé en ce que** l'on utilise le film de renfort pour assurer le maintien des segments de nappe unidirectionnelle transversale dans les positions dans lesquelles ils sont déposés.

40. Procédé selon l'une quelconque des revendications 1 à 39, **caractérisé en ce que** la liaison des nappes unidirectionnelles superposées est effectuée par aiguilletage.

41. Procédé selon l'une quelconque des revendications 1 à 39, **caractérisé en ce que** la liaison des nappes unidirectionnelles superposées est effectuée par couture ou tricotage.

42. Procédé selon l'une quelconque des revendications 1 à 39, **caractérisé en ce que** la liaison des nappes unidirectionnelles superposées est effectuée par collage.

43. Procédé selon la revendication 42, **caractérisé en ce que** la liaison des nappes unidirectionnelles superposées est effectuée par insertion d'un fil thermofusible entre les nappes.

44. Nappe unidirectionnelle fibreuse cohérente formée d'au moins un câble de filaments étalé ayant un nombre de filaments au moins égal à 12K, la nappe étant **caractérisée en ce qu'**elle est formée de filaments discontinus et a une masse surfacique au plus égale à 300g/m² et une largeur au moins égale à 5 cm.

45. Nappe selon la revendication 44, **caractérisée en ce qu'**elle est en fibres de carbone.

46. Nappe selon la revendication 44, **caractérisée en ce qu'**elle est formée de fibres de plusieurs matières différentes.

47. Nappe selon l'une quelconque des revendications 46, **caractérisée en ce qu'**elle est formée de fibres de plusieurs matières différentes intimement mélangées.

48. Nappe selon l'une quelconque des revendications 44 à 47, **caractérisée en ce qu'**elle est rendue cohérente par la présence d'un agent de liaison.

49. Nappe selon la revendication 48, **caractérisée en ce que** l'agent de liaison est éliminable.

50. Nappe selon la revendication 49, **caractérisée en ce que** l'agent de liaison est un polymère soluble dans l'eau.

51. Nappe selon l'une quelconque des revendications 44 à 47, **caractérisée en ce qu'**elle est rendue cohérente par léger entremêlement de filaments discontinus.

52. Nappe selon l'une quelconque des revendications 44 à 47, **caractérisée en ce qu'**elle est rendue cohérente par aiguilletage.

53. Pièce en matériau composite comprenant un renfort fibreux densifié par une matrice, **caractérisée en ce que** le renfort fibreux comprend au moins une nappe unidirectionnelle selon l'une quelconque des revendications 44 à 52.

54. Nappe fibreuse multiaxiale en forme de bande continue ayant une direction longitudinale, comprenant plusieurs nappes unidirectionnelles superposées avec des directions différentes et liées entre elles, **caractérisée en ce qu'**elle comporte au moins une nappe unidirectionnelle selon l'une quelconque des revendications 44 à 52.

55. Nappe multiaxiale selon la revendication 54, **caractérisée en ce qu'**elle est constituée de deux nappes unidirectionnelles faisant des angles égaux à +45° et -45° avec la direction longitudinale de la nappe multiaxiale.

56. Nappe multiaxiale selon la revendication 54, **caractérisée en ce qu'**elle comporte une nappe unidirectionnelle longitudinale orientée dans la direction longitudinale de la nappe multiaxiale et au moins deux nappes unidirectionnelles transversales disposées chacune sur une face respective de la nappe unidirectionnelle longitudinale et ayant des directions faisant des angles opposés avec la direction de la nappe unidirectionnelle longitudinale.

57. Procédé de réalisation d'une nappe fibreuse unidirectionnelle cohérente à partir d'au moins un câble de filaments continus ayant un nombre de filaments au moins égal à 12 K,
**caractérisé en ce que** le ou chaque câble est étalé et soumis à un étirage-craquage pour obtenir une bande unidirectionnelle de filaments discontinus, une nappe unidirectionnelle de filaments discontinus ayant une largeur au moins égale à 5 cm et une masse surfacique au plus égale à 300 g/m² est formée à partir d'au moins une bande undirectionnelle, et une cohésion transversale est conférée à la nappe undirectionnelle.

58. Procédé selon la revendication 57, **caractérisé en ce que** la nappe unidirectionnelle est formée à partir d'au moins un câble en carbone ayant un nombre de filaments au moins égal à 12 K.

59. Procédé selon la revendication 57, **caractérisé en ce que** la nappe unidirectionnelle est formée à partir de plusieurs câbles en des matières différentes.

60. Procédé selon l'une quelconque des revendications 57 à 59, **caractérisé en ce que** l'on confère une cohésion transversale à la nappe unidirectionnelle par léger entremêlement de filaments discontinus.

61. Procédé selon la revendication 60, **caractérisé en ce que** l'entremêlement est réalisé en soumettant la nappe à un jet d'eau sous pression lors de son passage sur un tapis.

62. Procédé selon l'une quelconque des revendications 57 à 59, **caractérisé en ce que** l'on confère une cohésion transversale à la nappe unidirectionnelle par aiguilletage.

63. Procédé selon l'une quelconque des revendications 60 à 62, **caractérisé en ce que**, après avoir conféré une cohésion transversale à la nappe unidirectionnelle, celle-ci est élargie.

64. Procédé selon l'une quelconque des revendications 57 à 59, **caractérisé en ce que** l'on confère une cohésion transversale à la nappe unidirectionnelle par apport d'un agent chimique de liaison.

65. Procédé selon la revendication 64, **caractérisé en ce que** l'on utilise un agent de liaison éliminable.

66. Procédé selon la revendication 65, **caractérisé en ce que** l'on utilise un agent de liaison soluble dans l'eau.

67. Procédé selon l'une quelconque des revendications 64 à 66, **caractérisé en ce que** l'agent de liaison est apporté par dépôt sur la nappe unidirectionnelle d'une composition liquide contenant l'agent de liaison ou un précurseur de celui-ci.

68. Procédé selon la revendication 67, **caractérisé en ce que** l'agent de liaison est apporté par dépôt sur la nappe unidirectionnelle d'une composition liquide contenant un polymère en solution.

69. Procédé selon la revendication 67, **caractérisé en ce que** l'agent de liaison est apporté par dépôt sur la nappe unidirectionnelle d'une composition liquide contenant une résine, et polymérisation de la résine.

70. Procédé selon l'une quelconque des revendications 67 à 69, **caractérisé en ce que** le dépôt de l'agent de liaison est effectué par projection de la composition liquide sur la nappe unidirectionnelle.

71. Procédé selon l'une quelconque des revendications 67 à 69, **caractérisé en ce que** le dépôt de l'agent de liaison est effectué par trempage de la nappe unidirectionnelle dans un bain contenant la composition liquide.

72. Procédé selon l'une quelconque des revendications 57 à 59, **caractérisé en ce que** l'on confère une cohésion transversale à au moins l'une des nappes unidirectionnelles par fixation d'au moins un fil thermofusible.

## Patentansprüche

1. Verfahren zur Herstellung einer multiaxialen Faserlage mit einer Längsrichtung wobei das Verfahren die Schritte enthält, welche darauf beruhen, wenigstens zwei Einrichtungslagen übereinander zu legen, die in unterschiedlichen Richtungen auf einen Träger geführt werden, welcher in einer zur Längsrichtung der herzustellenden multiaxialen Lage parallel verlaufenden Vorschubrichtung beweglich ist, wobei wenigstens eine der Einrichtungslagen quer zur Vorschubrichtung in aufeinanderfolgenden Abschnitten zugeführt wird, welche einen gleichen gewählten Winkel gegenüber der Vorschubrichtung bilden, und die übereinander gelegten Lagen miteinander zu verbinden, **dadurch gekennzeichnet, dass** wenigstens eine der Einrichtungslagen durch Ausbreiten wenigstens eines Seils aus Filamenten gebildet ist, so dass eine Lage mit im Wesentlichen regelmäßiger Dicke erhalten wird, die eine Breite von wenigstens gleich 5 cm und eine flächenbezogene Masse von höchstens gleich 300g/m² aufweist, und der gebildeten Einrichtungslage eine Querkohäsion verliehen wird, die es ihr ermöglicht, vor ihrer Überdeckung mit wenigstens einer weiteren Einrichtungslage behandelt zu werden.

2. Verfahren nach Anspruch 1, **dadurch gekennzeichnet, dass** zur Herstellung wenigstens einer der Einrichtungslagen mehrere Seile verwendet werden, die Seile ausgebreitet werden, um Einrichtungsstreifen zu bilden und die Streifen nebeneinander angeordnet werden, um eine Einrichtungslage zu erhalten, die eine Breite von wenigstens gleich 5 cm und eine flächenbezogene Masse von höchstens gleich 300g/m² aufweist.

3. Verfahren nach irgendeinem der Ansprüche 1 und 2, **dadurch gekennzeichnet, dass** die Fasern der Einrichtungslagen aus einem Material bestehen, das ausgewählt ist aus Kohlenstoff, Keramiken, Kohlenstoff- oder Keramikzwischenstoffen, Gläsern und Aramiden.

4. Verfahren nach Anspruch 3, **dadurch gekennzeichnet, dass** wenigstens eine der Einrichtungslagen durch Ausbreiten wenigstens eines Seils aus Kohlenstoff gebildet ist, das eine Filamentzahl von wenigstens gleich 12 K hat.

5. Verfahren nach irgendeinem der Ansprüche 1 bis 4, **dadurch gekennzeichnet, dass** aus Fasern unterschiedlicher Materialien gebildete Einrichtungslagen übereinander gelegt werden.

6. Verfahren nach irgendeinem der Ansprüche 1 bis 5, **dadurch gekennzeichnet, dass** wenigstens eine Einrichtungslage aus Fasern mehrerer unterschiedlicher Materialien gebildet ist.

7. Verfahren nach irgendeinem der Ansprüche 1 bis 6, **dadurch gekennzeichnet, dass** wenigstens eine der Einrichtungslagen aus durchgehenden Filamenten gebildet ist.

8. Verfahren nach irgendeinem der Ansprüche 1 bis 6, **dadurch gekennzeichnet, dass** wenigstens eine der Einrichtungslagen aus unzusammenhängenden Filamenten gebildet ist.

9. Verfahren nach Anspruch 8, **dadurch gekennzeichnet, dass** wenigstens eine der Einrichtungslagen durch Ausbreiten wenigstens eines Hybridseils gebildet ist, welches aus unzusammenhängenden, innig gemischten Filamenten aus mehreren unterschiedlichen Materialien besteht.

10. Verfahren nach irgendeinem der Ansprüche 8 und 9, **dadurch gekennzeichnet, dass** der Einrichtungslage durch leichtes Vermengen unzusammenhängender Filamente eine Querkohäsion verliehen wird.

11. Verfahren nach Anspruch 10, **dadurch gekennzeichnet, dass** das Vermengen realisiert wird, indem die Lage während sie über einen Teppich läuft einem Druckwasserstrahl ausgesetzt wird.

12. Verfahren nach irgendeinem der Ansprüche 1 bis 9, **dadurch gekennzeichnet, dass** wenigstens einer der Einrichtungslagen durch Nadelung eine Querkohäsion verliehen wird.

13. Verfahren nach irgendeinem der Ansprüche 10 bis 12, **dadurch gekennzeichnet, dass** die Einrichtungslage - nachdem ihr eine Querkohäsion verliehen wurde - verbreitert wird.

14. Verfahren nach irgendeinem der Ansprüche 1 bis 9, **dadurch gekennzeichnet, dass** wenigstens einer der Einrichtungslagen durch Zusatz eines chemischen Bindungsmittels eine Querkohäsion verliehen wird.

15. Verfahren nach Anspruch 14, **dadurch gekennzeichnet, dass** ein entfernbares Bindungsmittel verwendet wird.

16. Verfahren nach Anspruch 15, **dadurch gekennzeichnet, dass** ein wasserlösliches Bindungsmittel verwendet wird.

17. Verfahren nach irgendeinem der Ansprüche 14 bis 16, **dadurch gekennzeichnet, dass** das Bindungsmittel zugegeben wird, indem auf der Einrichtungslage eine flüssige, das Bindungsmittel oder einen Zwischenstoff hiervon enthaltende Zusammensetzung abgeschieden wird.

18. Verfahren nach Anspruch 17, **dadurch gekennzeichnet, dass** das Bindungsmittel zugegeben wird, indem auf der Einrichtungslage eine flüssige, ein Lösungspolymer enthaltende Zusammensetzung abgeschieden wird.

19. Verfahren nach Anspruch 17, **dadurch gekennzeichnet, dass** das Bindungsmittel zugegeben wird durch Abscheiden einer flüssigen, ein Harz enthaltenden Zusammensetzung auf der Einrichtungslage, und Polymerisation des Harzes.

20. Verfahren nach irgendeinem der Ansprüche 17 bis 19, **dadurch gekennzeichnet, dass** das Abscheiden des Bindungsmittels durch Aufspritzen der flüssigen Zusammensetzung auf die Einrichtungslage erfolgt.

21. Verfahren nach irgendeinem der Ansprüche 17 bis 19, **dadurch gekennzeichnet, dass** das Abscheiden des Bindungsmittels durch Eintauchen der Einrichtungslage in ein die flüssige Zusammensetzung enthaltendes Bad erfolgt.

22. Verfahren nach irgendeinem der Ansprüche 1 bis 9, **dadurch gekennzeichnet, dass** wenigstens einer der Einrichtungslagen durch Fixieren wenigstens einer warmschmelzbaren Faser eine Querkohäsion verliehen wird.

23. Verfahren nach irgendeinem der Ansprüche 1 bis 22, **dadurch gekennzeichnet, dass** eine multiaxiale Lage durch Übereinanderlegen von zwei querverlaufenden Einrichtungslagen hergestellt wird, die mit der Vorschubrichtung entgegengesetzte Winkel bilden.

24. Verfahren nach irgendeinem der Ansprüche 1 bis 22, **dadurch gekennzeichnet, dass** eine multiaxiale Lage durch Übereinanderlegen von wenigstens zwei Einrichtungslagen hergestellt wird, wobei eine der Einrichtungslagen eine Längslage ist, die eine zur Vorschubrichtung parallel verlaufende Richtung hat.

25. Verfahren nach Anspruch 24, **dadurch gekennzeichnet, dass** eine multiaxiale Lage durch Übereinanderlegen von wenigstens drei Einrichtungslagen hergestellt wird, wobei eine der Einrichtungslagen eine Längslage ist, die eine zur Vorschubrichtung parallel verlaufende Richtung hat und wobei wenigstens zwei weitere Einrichtungslagen Querlagen sind, deren Richtungen mit der Richtung der Längslage unterschiedliche Winkel bilden.

26. Verfahren nach Anspruch 25, **dadurch gekennzeichnet, dass** die Längslage zwischen zwei Querlagen angeordnet ist, deren Richtungen mit der Richtung der Längslage Winkel mit entgegengesetzten Vorzeichen bilden.

27. Verfahren nach irgendeinem der Ansprüche 24 bis 26, **dadurch gekennzeichnet, dass** die Längslage hergestellt wird, indem mehrere, jeweils durch Ausbreiten eines Seils erhaltene Einrichtungsstreifen nebeneinander angeordnet werden, so dass eine Längslage mit einer Breite von wenigstens gleich 10 cm erhalten wird.

28. Verfahren nach Anspruch 27, **dadurch gekennzeichnet, dass** die Längslage hergestellt wird, indem mehrere Einrichtungsstreifen nebeneinander angeordnet werden, die jeweils durch Ausbreiten eines Kohlenstoffseils mit einer Filamentzahl von wenigstens gleich 12 K erhalten werden.

29. Verfahren nach irgendeinem der Ansprüche 1 bis 28, **dadurch gekennzeichnet, dass** wenigstens eine der Einrichtungslagen quer zur Vorschubrichtung in aufeinanderfolgenden, aneinanderstoßend angeordneten Abschnitten zugeführt wird.

30. Verfahren nach irgendeinem der Ansprüche 1 bis 28, **dadurch gekennzeichnet, dass** wenigstens eine der Einrichtungslagen quer zur Vorschubrichtung in aufeinanderfolgenden, mit Teilüberlappung angeordneten Abschnitten zugeführt wird.

31. Verfahren nach irgendeinem der Ansprüche 1 bis 30, **dadurch gekennzeichnet, dass** wenigstens eine der Einrichtungslagen quer zur Vorschubrichtung zugeführt wird und in aufeinanderfolgenden Abschnitten aufgelegt wird, indem die querverlaufende Einrichtungslage über eine Länge vorgeschoben wird, die im Wesentlichen gleich der parallel zur Richtung der querverlaufenden Einrichtungslage gemessenen Abmessung der multiaxialen Lage ist, indem aus der so vorgeschobenen Lage ein Abschnitt ausgeschnitten wird und indem der ausgeschnittene Abschnitt auf den beweglichen Träger oder die in Herstellung befindliche multiaxiale Lage aufgelegt wird.

32. Verfahren nach Anspruch 31, **dadurch gekennzeichnet, dass** der bewegliche Träger während des Auflegens aufeinanderfolgender Abschnitte von wenigstens einer querverlaufenden Einrichtungslage und der Herstellung der multiaxialen Lage kontinuierlich in Vorschubrichtung bewegt wird.

33. Verfahren nach irgendeinem der Ansprüche 31 und 32, **dadurch gekennzeichnet, dass** die querverlaufende Einrichtungslage in den Bereichen, in denen sie geschnitten wird, lokal verstärkt wird.

34. Verfahren nach Anspruch 33, **dadurch gekennzeichnet, dass** die querverlaufende Einrichtungslage durch Fixieren eines Films auf wenigstens einer ihrer Seiten verstärkt wird.

35. Verfahren nach Anspruch 34, **dadurch gekennzeichnet, dass** die querverlaufende Einrichtungslage durch Fixieren eines warmklebenden Films und Druckerhitzung verstärkt wird.

36. Verfahren nach irgendeinem der Ansprüche 31 bis 35, **dadurch gekennzeichnet, dass** die Einrichtungslagen wenigstens bis zum Verbinden der übereinander gelegten Einrichtungslagen in Bezug zueinander gehalten werden.

37. Verfahren nach Anspruch 36, **dadurch gekennzeichnet, dass** das Halten der Einrichtungslagen durch Befestigen an Spitzen erfolgt.

38. Verfahren nach Anspruch 36, **dadurch gekennzeichnet, dass** das Halten der Einrichtungslagen durch Fixieren wenigstens eines Films entlang eines jeden Längsrandes der in Herstellung befindlichen multiaxialen Lage gewährleistet wird.

39. Verfahren nach irgendeinem der Ansprüche 34 und 35, **dadurch gekennzeichnet, dass** der Verstärkungsfilm verwendet wird, um das Halten der Abschnitte der querverlaufenden Einrichtungslage in den Positionen sicherzustellen, in denen sie aufgelegt werden.

40. Verfahren nach irgendeinem der Ansprüche 1 bis 39, **dadurch gekennzeichnet, dass** das Verbinden der übereinander gelegten Einrichtungslagen durch Nadelung vollzogen wird.

41. Verfahren nach irgendeinem der Ansprüche 1 bis 39, **dadurch gekennzeichnet, dass** das Verbinden der übereinander gelegten Einrichtungslagen durch Nähen oder Stricken vollzogen wird.

42. Verfahren nach irgendeinem der Ansprüche 1 und 39, **dadurch gekennzeichnet, dass** das Verbinden der übereinander gelegten Einrichtungslagen durch Kleben erfolgt.

43. Verfahren nach Anspruch 42, **dadurch gekennzeichnet, dass** das Verbinden der übereinander gelegten Einrichtungslagen durch Einfügen einer warmschmelzbaren Faser zwischen den Lagen vollzogen wird.

44. Kohärente Fasereinrichtungslage, welche aus wenigstens einem ausgebreiteten Filamentseil gebildet ist, das eine Filamentzahl von wenigstens gleich 12 K aufweist, wobei die Lage **dadurch gekennzeichnet ist, dass** sie aus unzusammenhängenden Filamenten gebildet ist und eine flächenbezogene Masse von höchstens gleich 300g/m² sowie eine Breite von wenigstens gleich 5 cm aufweist.

45. Lage nach Anspruch 44, **dadurch gekennzeichnet, dass** sie aus Kohlenstofffasern besteht.

46. Lage nach Anspruch 44, **dadurch gekennzeichnet, dass** sie aus Fasern aus mehreren unterschiedlichen Materialien gebildet ist.

47. Lage nach irgendeinem der Ansprüche 44 bis 46, **dadurch gekennzeichnet, dass** sie aus Fasern aus mehreren unterschiedlichen, innig gemischten Materialien gebildet ist.

48. Lage nach irgendeinem der Ansprüche 44 bis 47, **dadurch gekennzeichnet, dass** sie durch das Vorhandensein eines Bindungsmittels kohärent gemacht wird.

49. Lage nach Anspruch 48, **dadurch gekennzeichnet, dass** das Bindungsmittel entfernbar ist.

50. Lage nach Anspruch 49, **dadurch gekennzeichnet, dass** das Bindungsmittel ein wasserlösliches Polymer ist.

51. Lage nach irgendeinem der Ansprüche 44 bis 47, **dadurch gekennzeichnet, dass** sie durch leichtes Vermengen von unzusammenhängenden Filamenten kohärent gemacht wird.

52. Lage nach irgendeinem der Ansprüche 44 bis 47, **dadurch gekennzeichnet, dass** sie durch Nadelung kohärent gemacht wird.

53. Teil aus Verbundmaterial mit einer durch eine Matrix verdichteten Faserverstärkung, **dadurch gekennzeichnet, dass** die Faserverstärkung wenigstens eine Einrichtungslage nach irgendeinem der Ansprüche 44 bis 52 enthält.

54. Multiaxiale Faserlage in Form einer durchgehenden Bahn mit einer Längsrichtung, die mehrere mit unterschiedlichen Richtungen übereinander gelegte und untereinander verbundene Einrichtungslagen enthält, **dadurch gekennzeichnet, dass** sie wenigstens eine Einrichtungslage nach irgendeinem der Ansprüche 44 bis 52 enthält.

55. Multiaxiale Lage nach Anspruch 54, **dadurch gekennzeichnet, dass** sie von zwei Einrichtungslagen gebildet ist, die Winkel gleich +45° und -45° mit der Längsrichtung der multiaxialen Lage bilden.

56. Multiaxiale Lage nach Anspruch 54, **dadurch gekennzeichnet, dass** sie eine Längseinrichtungslage, welche in der Längsrichtung der multiaxialen Lage ausgerichtet ist, und wenigstens zwei querverlaufende Einrichtungslagen aufweist, die jeweils auf einer jeweiligen Seite der Längseinrichtungslage angeordnet sind und Richtungen aufweisen, die mit der Richtung der Längseinrichtungslage entgegengesetzte Winkel bilden.

57. Verfahren zur Herstellung einer kohärenten Einrichtungsfaserlage aus wenigstens einem Seil aus durchgehenden Filamenten, das eine Filamentzahl von wenigstens gleich 12 K aufweist, **dadurch gekennzeichnet, dass** das oder jedes Seil ausgebreitet wird und einem Strecken-Reißen unterzogen wird, um einen Einrichtungsstreifen aus unzusammenhängenden Filamenten zu erhalten, eine Einrichtungslage aus unzusammenhängenden Filamenten mit einer Breite von wenigstens gleich 5 cm und einer flächenbezogenen Masse von höchstens gleich 300 g/m² aus wenigstens einem Einrichtungsstreifen gebildet wird und der Einrichtungslage eine Querkohäsion verliehen wird.

58. Verfahren nach Anspruch 57, **dadurch gekennzeichnet, dass** die Einrichtungslage aus wenigstens einem Kohlenstoffseil mit einer Filamentzahl von wenigstens gleich 12 K gebildet wird.

59. Verfahren nach Anspruch 57, **dadurch gekennzeichnet, dass** die Einrichtungslage aus mehreren Seilen aus unterschiedlichen Materialien gebildet wird.

60. Verfahren nach irgendeinem der Ansprüche 57 bis 59, **dadurch gekennzeichnet, dass** der Einrichtungslage durch leichtes Vermengen von unzusammenhängenden Filamenten eine Querkohäsion verliehen wird.

61. Verfahren nach Anspruch 60, **dadurch gekennzeichnet, dass** das Vermengen realisiert wird, indem die Lage während sie über einen Teppich läuft einem Druckwasserstrahl ausgesetzt wird.

62. Verfahren nach irgendeinem der Ansprüche 57 bis 59, **dadurch gekennzeichnet, dass** der Einrichtungslage durch Nadelung eine Querkohäsion verliehen wird.

63. Verfahren nach irgendeinem der Ansprüche 60 bis 62, **dadurch gekennzeichnet, dass** die Einrichtungslage - nachdem ihr eine Querkohäsion verliehen wurde - verbreitert wird.

64. Verfahren nach irgendeinem der Ansprüche 57 bis 59, **dadurch gekennzeichnet, dass** der Einrichtungslage durch Zusatz eines chemischen Bindungsmittels eine Querkohäsion verliehen wird.

65. Verfahren nach Anspruch 64, **dadurch gekennzeichnet, dass** ein entfernbares Bindungsmittel verwendet wird.

66. Verfahren nach Anspruch 65, **dadurch gekennzeichnet, dass** ein wasserlösliches Bindungsmittel verwendet wird.

67. Verfahren nach irgendeinem der Ansprüche 64 bis 66, **dadurch gekennzeichnet, dass** das Bindungsmittel zugegeben wird, indem auf der Einrichtungslage eine flüssige, das Bindungsmittel oder einen Zwischenstoff hiervon enthaltende Zusammensetzung abgeschieden wird.

68. Verfahren nach Anspruch 67, **dadurch gekennzeichnet, dass** das Bindungsmittel zugegeben wird, indem auf der Einrichtungslage eine flüssige, ein Lösungspolymer enthaltende Zusammensetzung abgeschieden wird.

69. Verfahren nach Anspruch 67, **dadurch gekennzeichnet, dass** das Bindungsmittel zugegeben wird durch Abscheiden einer flüssigen, ein Harz enthaltenden Zusammensetzung auf der Einrichtungslage, und Polymerisation des Harzes.

70. Verfahren nach irgendeinem der Ansprüche 67 bis 69, **dadurch gekennzeichnet, dass** das Abscheiden des Bindungsmittels durch Aufspritzen der flüssigen Zusammensetzung auf die Einrichtungslage erfolgt.

71. Verfahren nach irgendeinem der Ansprüche 67 bis 69, **dadurch gekennzeichnet, dass** das Abscheiden des Bindungsmittels durch Eintauchen der Einrichtungslage in ein die flüssige Zusammensetzung enthaltendes Bad erfolgt.

72. Verfahren nach irgendeinem der Ansprüche 57 bis 59, **dadurch gekennzeichnet, dass** wenigstens einer der Einrichtungslagen durch Fixieren wenigstens einer warmschmelzbaren Faser eine Querkohäsion verliehen wird.

## Claims

1. A method of making a multiaxial fibre sheet having a longitudinal direction, the method comprising the steps consisting in superposing at least two unidirectional sheets fed in different directions onto a support that moves in a direction of advance parallel to the longitudinal direction of the multiaxial sheet to make, at least one of the unidirectional sheets being fed transversely to the direction of advance as successive segments that form the same selected angle relative to the direction of advance, and in bonding the superposed sheets together,
the method being **characterised in that** at least one of the unidirectional sheets is formed by spreading at least one tow of filaments so as to obtain a sheet of substantially uniform thickness, having a width of not less than 5 cm and a surfacic mass of not more than 300 g/m², and transverse cohesion is imparted to the unidirectional sheet formed enabling it to be handled prior to being superposed with at least one other unidirectional sheet.

2. A method according to claim 1, **characterised in that** to make at least one of the unidirectional sheets, a plurality of tows are used, the tows are spread so as to form unidirectional strips, and the strips are placed side by side so as to obtain a unidirectional sheet having a width of not less than 5 cm and having a surfacic mass of not more than 300 g/m².

3. A method according to claim 1 or 2, **characterised in that** the fibres of the unidirectional sheets are of a material selected from carbon, ceramics, carbon or ceramic precursors, glasses, and aramids.

4. A method according to claim 3, **characterised in that** at least one of the unidirectional sheets is obtained by spreading at least one carbon tow in which the number of filaments is not less than 12 K.

5. A method according to any one of claims 1 to 4, **characterised in that** unidirectional sheets made of fibres of different materials are superposed.

6. A method according to any one of claims 1 to 5, **characterised in that** at least one unidirectional sheet is made of fibres constituted by a plurality of different materials.

7. A method according to any one of claims 1 to 6, **characterised in that** at least one of the unidirectional sheets is made of continuous filaments.

8. A method according to any one of claims 1 to 6, **characterised in that** at least one of the unidirectional sheets is made of discontinuous filaments.

9. A method according to claim 8, **characterised in that** at least one of the unidirectional sheets is made by spreading at least one hybrid tow constituted by intimately mixed discontinuous filaments of a plurality of different materials.

10. A method according to claim 8 or 9, **characterised in that** transverse cohesion is imparted to the unidirectional sheet by lightly matting discontinuous filaments.

11. A method according to claim 10, **characterised in that** the matting is performed by subjecting the sheet as it passes over a plate to a jet of water under pressure.

12. A method according to any one of claims 1 to 9, **characterised in that** transverse cohesion is imparted to at least one of the unidirectional sheets by needling.

13. A method according to any one of claims 10 to 12, **characterised in that**, after transverse cohesion has been imparted to the unidirectional sheet, the sheet is widened.

14. A method according to any one of claims 1 to 9, **characterised in that** transverse cohesion is imparted to at least one of the unidirectional sheets by applying a chemical bonding agent.

15. A method according to claim 14, **characterised in that** a bonding agent is used that can be eliminated.

16. A method according to claim 15, **characterised in that** a water-soluble bonding agent is used.

17. A method according to any one of claims 14 to 16, **characterised in that** the bonding agent is applied by depositing on the unidirectional sheet a liquid compound containing the bonding agent or a precursor therefor.

18. A method according to claim 17, **characterised in that** the bonding agent is applied by depositing, on the unidirectional sheet, a liquid compound containing a polymer in solution.

19. A method according to claim 17, **characterised in that** the bonding agent is applied by depositing, on the unidirectional sheet, a liquid compound containing a resin, and by polymerizing the resin.

20. A method according to any one of claims 17 to 19, **characterised in that** the bonding agent is deposited by spraying the liquid compound onto the unidirectional sheet.

21. A method according to any one of claims 17 to 19, **characterised in that** the bonding agent is deposited by soaking the unidirectional sheet in a bath containing the liquid compound.

22. A method according to any one of claims 1 to 9, **characterised in that** transverse cohesion is imparted to at least one of the unidirectional sheets by fixing at least one heat-fusible thread.

23. A method according to any one of claims 1 to 22, **characterised in that** a multiaxial sheet is made by superposing two transverse unidirectional sheets at opposite angles relative to the direction of advance.

24. A method according to any one of claims 1 to 22, **characterised in that** a multiaxial sheet is made by superposing at least two unidirectional sheets, one of the unidirectional sheets being a longitudinal sheet of direction parallel to the direction of advance.

25. A method according to claim 24, **characterised in that** a multiaxial sheet is made by superposing at least three unidirectional sheets, one of the unidirectional sheets being a longitudinal sheet of direction parallel to the direction of advance, and at least two other unidirectional sheets being transverse sheets of directions at different angles to the direction of the longitudinal sheet.

26. A method according to claim 25, **characterised in that** the longitudinal sheet is disposed between two transverse sheets of directions that form angles of opposite signs relative to the direction of the longitudinal sheet.

27. A method according to any one of claims 24 to 26, **characterised in that** the longitudinal sheet is made by placing side by side a plurality of unidirectional strips each obtained by spreading a tow, thereby obtaining a longitudinal sheet having a width of not less than 10cm.

28. A method according to claim 27, **characterised in that** the longitudinal sheet is made by placing side by side a plurality of unidirectional strips each obtained by spreading a carbon tow having a number of filaments that is not less than 12 K.

29. A method according to any one of claims 1 to 28, **characterised in that** at least one of the unidirectional sheets is fed transversely to the direction of advance as successive segments disposed so as to be adjacent.

30. A method according to any one of claims 1 to 28, **characterised in that** at least one of the unidirectional sheets is fed transversely to the direction of advance as successive segments disposed with partial overlap.

31. A method according to any one of claims 1 to 30, **characterised in that** at least one of the unidirectional sheets is fed transversely to the direction of advance and is deposited in successive segments by moving the transverse unidirectional sheet over a length substantially equal to the dimension of the multiaxial sheet as measured parallel to the direction of the transverse unidirectional sheet, by cutting out a segment from the sheet fed in this way, and by depositing the cutoff segment on the moving support or the multiaxial sheet that is being made.

32. A method according to claim 31, **characterised in that** the moving support is moved continuously in the direction of advance while successive segments of at least one transverse unidirectional sheet are being deposited and the multiaxial sheet is being made.

33. A method according to claim 31 or 32, **characterised in that** the transverse unidirectional sheet is locally reinforced in the zones where it is cut out.

34. A method according to claim 33, **characterised in that** the transverse unidirectional sheet is reinforced by fixing a film on at least one of its faces.

35. A method according to claim 34, **characterised in that** the transverse unidirectional sheet is reinforced by fixing a thermo-adhesive film and by heating under pressure.

36. A method according to any one of claims 31 to 35, **characterised in that** the unidirectional sheets are held relative to one another at least until the superposed unidirectional sheets have been bonded together.

37. A method according to claim 36, **characterised in that** the unidirectional sheets are held by being fixed on spikes.

38. A method according to claim 36, **characterised in that** the unidirectional sheets are held by fixing at least one film along each longitudinal edge of the multiaxial sheet that is being made.

39. A method according to claim 34 or 35, **characterised in that** the reinforcing film is used to hold the transverse unidirectional sheet segments in the positions into which they are deposited.

40. A method according to any one of claims 1 to 39, **characterised in that** the superposed unidirectional sheets are bonded together by needling.

41. A method according to any one of claims 1 to 39, **characterised in that** the superposed unidirectional sheets are bonded together by sewing or knitting.

42. A method according to any one of claims 1 to 39, **characterised in that** the superposed unidirectional sheets are bonded together by adhesive.

43. A method according to claim 42, **characterised in that** the superposed unidirectional sheets are bonded together by inserting a heat-fusible thread between the sheets.

44. A coherent fibrous unidirectional sheet constituted by at least one tow of filaments that is spread and that has a number of filaments not less than 12K, the sheet being **characterised in that** it is constituted by discontinuous filaments, it has a surfacic mass of not more than 300 g/m² and is of a width of not less than 5 cm.

45. A sheet according to claim 44, **characterised in that** it is made of carbon fibres.

46. A sheet according to claim 44, **characterised in that** it is made of fibres constituted by a plurality of different materials.

47. A sheet according to claim 46, **characterised in that** it is made of fibres constituted by a plurality of different intimately mixed materials.

48. A sheet according to any one of claims 44 to 47, **characterised in that** cohesion is imparted thereto by the presence of a bonding agent.

49. A sheet according to claim 48, **characterised in that** the bonding agent is suitable for being eliminated.

50. A sheet according to claim 49, **characterised in that** the bonding agent is a water-soluble polymer.

51. A sheet according to any one of claims 44 to 47, **characterised in that** cohesion is imparted thereto by lightly matting discontinuous filaments.

52. A sheet according to any one of claims 44 to 47, **characterised in that** cohesion is imparted thereto by needling.

53. A composite material part comprising fibre reinforcement densified by a matrix, the part being **characterised in that** the fibre reinforcement comprises at least one unidirectional sheet according to any one of claims 44 to 52.

54. A multiaxial fibre sheet in the form of a continuous strip having a longitudinal direction, comprising a plurality of superposed unidirectional sheets of different directions that are bonded together, the sheet being **characterised in that** it includes at least one unidirectional sheet according to any one of claims 44 to 52.

55. A multiaxial sheet according to claim 54, **characterised in that** it is constituted by two unidirectional sheets at equal angles of +45° and - 45° to the longitudinal direction of the multiaxial sheet.

56. A multiaxial sheet according to claim 54, **characterised in that** it comprises a longitudinal unidirectional sheet oriented in the longitudinal direction of the multiaxial sheet and at least two transverse unidirectional sheets each disposed on a respective face of the longitudinal unidirectional sheet and extending in directions that make opposite angles with the direction of the longitudinal unidirectional sheet.

57. A method of making a cohesive unidirectional fibre sheet from at least one tow of continuous filaments having a number of filaments that is not less than 12K,
the method being **characterised in that** the or each tow is spread and subjected to a spreading-cracking in order to obtain a unidirectional strip of discontinuous filaments, a unidirectional sheet of discontinuous filaments having a width of not less than 5 cm and a surfacic mass of not more than 300 g/m² is made from at least one unidirectional strip, and transverse cohesion is imparted to the unidirectional sheet.

58. A method according to claim 57, **characterised in that** the unidirectional sheet is made from at least one carbon tow in which the number of filaments is not less than 12 K.

59. A method according to claim 57, **characterised in that** the unidirectional sheet is made from a plurality of tows constituted of different materials.

60. A method according to any one of claims 57 to 59, **characterised in that** transverse cohesion is imparted to the unidirectional sheet by lightly matting discontinuous filaments.

61. A method according to claim 60, **characterised in that** the matting is performed by subjecting the sheet as it passes over a plate to a jet of water under pressure.

62. A method according to any one of claims 57 to 59, **characterised in that** transverse cohesion is imparted to the unidirectional sheet by needling.

63. A method according to any one of claims 60 to 62, **characterised in that**, after transverse cohesion has been imparted to the unidirectional sheet, the sheet is widened.

64. A method according to any one of claims 57 to 59, **characterised in that** transverse cohesion is imparted to the unidirectional sheet by applying a chemical bonding agent.

65. A method according to claim 64, **characterised in that** a bonding agent is used that can be eliminated.

66. A method according to claim 65, **characterised in that** a water-soluble bonding agent is used.

67. A method according to any one of claims 64 to 66, **characterised in that** the bonding agent is applied by depositing on the unidirectional sheet a liquid compound containing the bonding agent or a precursor therefor.

68. A method according to claim 67, **characterised in that** the bonding agent is applied by depositing, on the unidirectional sheet, a liquid compound containing a polymer in solution.

69. A method according to claim 67, **characterised in that** the bonding agent is applied by depositing, on the unidirectional sheet, a liquid compound containing a resin, and by polymerizing the resin.

70. A method according to any one of claims 67 to 69, **characterised in that** the bonding agent is deposited by spraying the liquid compound onto the unidirectional sheet.

71. A method according to any one of claims 67 to 69, **characterised in that** the bonding agent is deposited by soaking the unidirectional sheet in a bath containing the liquid compound.

72. A method according to any one of claims 57 to 59, **characterised in that** transverse cohesion is imparted to at least one of the unidirectional sheets by fixing at least one heat-fusible thread.
